# EUROPEAN PATENT APPLICATION

(11) **EP 1 600 629 A2**
(43) Date of publication of application: **30.11.2005**
(21) Application number: 05011487.5
(22) Date of filing: 27.05.2005
(51) Int. Cl.: F02N 11/08

(54) **Engine starting system**

(30) Priority: 28.05.2004 JP 2004160229; 04.06.2004 JP 2004167431
(71) Applicant: Mazda Motor Corporation, Aki-gun, Hiroshima (JP)
(72) Inventor: Tetsuno, Masayuki, Aki-gun, Hiroshima (JP); Taga, Junichi, Aki-gun, Hiroshima (JP); Araki, Keiji, Aki-gun, Hiroshima (JP)
(74) Representative: Laufhütte, Dieter

(57) **Abstract**

Disclosed is an engine starting system for automatically stopping and restarting an engine of a vehicle equipped with an automatic transmission mechanism having a torque converter. The engine starting system comprises automatic stop control means 46 operable, when a predetermined automatic engine stop condition is satisfied, to automatically stop the engine, automatic start control means operable, when an engine restart condition, to automatically restart the engine, alternator-output current control means 44 for adjusting a load to be imposed on the engine after the satisfaction of the automatic engine stop condition, at a given level. The automatic stop control means 46 includes speed-ratio calculation means for calculating a speed ratio (Te/Ne) based on each output from engine-speed detection means and turbine-speed detection means. The automatic stop control means is operable to instruct the alternator-output current control means 44 to adjust the load in such a manner as to be reduced when the speed ratio is less than a given reference value, relative to when the speed ratio is equal to or greater than the reference value.

## Description

### TECHNICAL FIELD

The present invention relates to an engine starting system, and more particularly to an engine starting system for automatically stopping an engine in an operating state, such as an idling state, when a predetermined automatic engine stop condition is satisfied, and then automatically restarting the automatically stopped engine when a restart condition is satisfied.

### BACKGROUND ART

In late years, as part of measures for reductions in fuel consumption and CO₂ emissions, efforts have been made to develop techniques for automatic engine stop control (so-called "idling stop control") intended to automatically stop an engine in an operating state, such as an idling state, and then automatically restart the engine upon satisfaction of a restart condition, e.g. a driver's action for vehicle start. In the idling stop control, a high response capability is required for the restart process to allow a stopped engine to be quickly started in response to satisfaction of a restart condition, such as a driver's action for vehicle start. Further, a conventional technique commonly used for restarting an engine through a cranking process of driving an engine output shaft using a starter motor can be hardly applied to the above restart process, because the use of the conventional technique involves problems about increase in power consumption and deterioration in durability of the starter motor due to frequent activations of the starter motor.

Thus, it is desirable to use a restart control technique of injecting fuel into a cylinder in the state after being stopped in an expansion stroke, and igniting an obtained air-fuel mixture in the cylinder to induce combustion so as to quickly start the engine by means of the resulting combustion energy. However, if a piston of the cylinder in the state after being stopped in the expansion stroke is stopped at an inadequate position, for example, at a position excessively close to a top dead center or bottom dead center, an air quantity in the cylinder will be significantly reduced to cause difficulties in obtaining sufficient combustion energy or assuring a stroke length for allowing the combustion energy to act on the piston will be excessively shortened. This is likely to preclude the engine from being properly started.

As measures against the above problems, there has been known techniques of controlling a brake mechanism associated with an crankshaft of an engine, in such a manner that a piston of a cylinder to be stopped in an expansion stroke is stopped at an adequate position within the expansion stroke, as disclosed, for example, in Japanese Utility Model Laid-Open Publication No. 60-128975. There has also been known a technique of selecting a lean air-fuel-ratio injection mode in response to determining the satisfaction of an automatic engine stop condition to provide an increased intake pressure so as to increase a compression pressure in such a manner that a piston of a cylinder to be stopped in an expansion stroke can be stopped at a given position, as disclosed in Japanese Patent Laid-Open Publication No. 2001-173473.

The applicant filed a patent application for a control technique of stopping fuel supply and increasing an opening degree of a throttle value in response to satisfaction of an automatic engine stop condition, to facilitate scavenging of burnt gas in cylinders, and then closing the throttle valve at a given timing, in such a manner as to make a difference in an intake-air quantity between respective cylinders to be stopped in a compression stroke and in an expansion stroke to allow the cylinder to be stopped in an expansion stroke to be stopped at an adequate position for engine starting (see European Patent Laid-Open Publication No. 1403512).

As is well known, a vehicle includes the so-called "automatic transmission (AT) car", which is equipped with an automatic transmission unit adapted to be switchable between a plurality of power transmission states including a neutral state in which the transmission of a driving force from an engine to wheels is cut off, and a drive state in which a driving force from the engine can be transferred to the wheels. As for the AT cars, in the aforementioned technique of stopping a piston at a position falling within an adequate range by means of an engine speed control based on application of a braking force to a crankshaft or a throttle valve control, as disclosed, for example, the above Japanese Utility Model Laid-Open Publication No. 60-128975, Japanese Patent Laid-Open Publication No. 2001-173473 and European Patent Laid-Open Publication No. 1403512, it is desirable to execute an automatic engine stop control after the automatic transmission unit is shifted into the neutral state, because if the control is executed in the drive state, a force, such as driving or resisting force, will be transmitted from wheels to an crankshaft during deceleration or stop of a vehicle to cause instability in lowering level of engine speed.

In this regard, however, depending on road conditions, a vehicle can be re-accelerated just after deceleration or stop of the vehicle. In this case, if the automatic transmission is shifted into the neutral state upon to deceleration or stop of the vehicle, it is difficult to ensure quick re-acceleration.

In view of the above circumstances, it is an object of the present invention to provide an engine starting system capable of stopping a piston at an adequate position when an engine is automatically stopped and reliably restarting the engine, with enhanced re-acceleration performance and in a simplified structure.

### DISCLOSURE OF INVENTION

In order to achieve the above object, according to the present invention, there is provided an engine starting system for automatically stopping and restarting an engine of a vehicle equipped with an automatic transmission mechanism having a torque converter, wherein the vehicle includes turbine-speed detection means for detecting a turbine speed (Te) of the automatic transmission mechanism directly or indirectly based on information from the automatic transmission mechanism, and the engine includes: combustion control means for controlling a fuel injection quantity and a fuel injection timing of a fuel injection valve operable to inject fuel into each of a plurality of cylinders of the engine, and controlling an ignition timing of a plurality of spark plugs provided in the corresponding cylinders, to execute combustion control corresponding to each engine operation state; fuel-supply control means for controlling the execution and discontinuation of the fuel injection by the fuel injection valve to control a fuel supply to each of the cylinders; and engine-speed detection means for detecting an engine speed (Ne). The engine starting system comprises: automatic stop control means operable, when a predetermined automatic engine stop condition is satisfied, to instruct the fuel-supply control means to discontinue the fuel injection from the fuel injection valve, so as to automatically stop the engine; automatic start control means operable, when an engine restart condition for the automatically stopped engine is satisfied, to instruct the fuel-supply control means and the combustion control means to inject fuel from the fuel injection valve into at least one of the cylinders which is in the state after being stopped in an expansion stroke, and ignite the injected fuel by the spark plug of the cylinder and induce combustion so as to automatically restart the engine; and load adjustment means for adjusting a load to be imposed on the engine after the satisfaction of the automatic engine stop condition, at a given level. The automatic stop control means includes speed-ratio calculation means for calculating a speed ratio (Te/Ne) of the turbine speed (Tc) of the torque converter to the engine speed (Nc) in accordance with each output from the engine-speed detection means and the turbine-speed detection means. The automatic stop control means is operable to, during the automatic engine stop control after the satisfaction of the automatic engine stop condition, instruct the load adjustment means to adjust the load to be imposed on the engine, in accordance with the speed ratio (Te/Ne) calculated by the speed-ratio calculation means, in such a manner that the load is reduced when the speed ratio (Te/Ne) is less than a given reference value, relative to when the speed ratio (Te/Ne) is equal to or greater than the reference value.

In the engine starting system of the present invention, the automatic transmission mechanism may be designed to be switchable between a neutral state in which the transmission of a driving force from the engine to wheels of the vehicle is cut off, and a drive state in which the driving force from the engine is allowed to be transmitted to the wheels, so as to serve as the load adjustment means, and the automatic stop control means may be operable to instruct the load adjustment means to adjust the automatic transmission mechanism in such as manner as to have the drive state when the speed ratio (Te/Ne) calculated by the speed-ratio Calculation means is equal to or greater than the reference value, and to have the neutral state when the speed ratio (Te/Ne) is less than the reference value.

In the engine starting system of the present invention, the reference value may be 1 or a value close to 1.

Further, the load adjustment means may include an alternator adapted to be driven by the engine. In this case, the automatic stop control means may be operable to instruct the load adjustment means to set a target output current of the alternator at a smaller value when the speed ratio (Te/Ne) calculated by the speed-ratio calculation means is less than the reference value, as compared to when the speed ratio (Te/Ne) is greater than the reference value.

In this engine starting system, the automatic stop control means may be operable to instruct the load adjustment means to set a target output current of the alternator at a given value in response to discontinuation of the fuel supply from the fuel injection valve, and then adjust the given value depending on the speed ratio (Te/Ne) calculated by the speed-ratio calculation means.

In the engine starting system of the present invention, the automatic stop control means may be operable to set the engine speed (Ne) at which the fuel-supply control means is instructed to discontinue the fuel injection from the fuel injection valve during the automatic engine stop control, at a value greater than a normal idling speed, and to set the engine speed (Ne) at a time before the discontinuation of the fuel injection from the fuel injection valve by use of the fuel-supply control means, at a larger value when the speed ratio (Te/Ne) calculated by the speed-ratio calculation means before the discontinuation of the fuel injection from the fuel injection valve by use of the fuel-supply control means is less than a given threshold value, relative to when the speed ratio (Te/Ne) is equal to or greater than the threshold value.

In the engine starting system of the present invention, the automatic engine stop condition may be set to be satisfied even when the vehicle is in a running state. In this case, the automatic stop control means may be operable to determine whether the automatic engine stop condition is satisfied, and, when determining that the automatic engine stop condition is satisfied in the vehicle running state, to instruct the fuel-supply control means to discontinue the fuel injection from the fuel injection valve, despite the vehicle running state.

In this engine starting system, the automatic transmission mechanism may include a multi-speed transmission mechanism adapted to be switchable between a plurality of speed ranges having a low-speed range and a high-speed range, in a drive state allowing a driving force from the engine to be transmitted to wheels of the vehicle. In this case, the automatic stop control means may be operable to instruct the fuel-supply control means to discontinue the fuel injection from the fuel injection valve in the vehicle running state, on the condition that the automatic transmission mechanism is in the high-speed drive state.

Further, in this engine starting system, the torque converter of the automatic transmission mechanism may be adapted to be switchable between a lockup state and an un-lockup state, in such a manner as to be shifted to the lockup state during deceleration of the vehicle, and shifted from the lockup state to the un-lockup state at a given engine speed. In this case, the automatic stop control means may be operable to determine whether the automatic engine stop condition is satisfied, at a time when or after the engine speed (Ne) reaches an lockup release speed at which the torque converter is shifted from the lockup state to the un-lockup state.

In the above engine starting system, the fuel-supply control means may be operable to execute a deceleration fuel-cut control for discontinuing the fuel injection from the fuel injection valve to each of the cylinders in a given engine speed range during deceleration of the vehicle. In this case, the automatic stop control means may be operable, when the deceleration fuel-cut control is executed, and the automatic engine stop condition is determined to be satisfied, to preclude the fuel-supply control means from resuming the fuel injection from the fuel injection valve, so as to discontinue the fuel injection from the fuel injection valve to each of the cylinders to achieve the automatic engine strop control.

In this engine starting system, the automatic transmission mechanism may be designed to be switchable between a neutral state in which the transmission of a driving force from the engine to wheels of the vehicle is cut off, and a drive state in which the driving force from the engine is allowed to be transmitted to the wheels. In this case, the automatic stop control means may be operable to, during the automatic engine stop control after the satisfaction of the automatic engine stop condition, set the automatic transmission mechanism in the drive state, when the automatic engine stop control is executed using the deceleration fuel-cut control of the fuel-supply control means, and to set the automatic transmission mechanism in the neutral state, when the automatic engine stop control is initiated under the condition that the fuel injection control means executes the fuel injection from the fuel injection valve to each of the cylinders.

### BRIEF DESCRIPTION OF DRAWINGS

FIG 1 is a partial sectional schematic diagram of an engine having an engine starting system according to one embodiment of the present invention.
FIG 2 is an explanatory diagram showing the structure of an intake system and an exhaust system of the engine.
FIG 3 is a schematic diagram showing one example of an automatic transmission unit associated with an engine starting system according to one embodiment of the present invention.
FIG 4 is a time chart showing changes in engine speed during an automatic engine stop control, wherein the automatic transmission unit is set in a drive state.
FIGS. 5A and 5B are explanatory diagrams showing the relationship between a piston stop position and an air quantity in two cylinders whose pistons are to be located in expansion and compression strokes, respectively, when the engine is stopped.
FIG 6 is a time chart showing changes in engine speed during the automatic engine stop control, wherein the automatic transmission unit is set in drive and neutral states.
FIG 7 is a time chart showing changes in throttle valve opening, target output current, etc., during the automatic engine stop control, wherein the automatic transmission unit is set in the neutral state.
FIG. 8 is a distribution chart showing the correlation between an engine speed and a piston stop position during the automatic engine stop control.
FIGS. 9A and 9B are time charts showing changes in throttle valve opening, target output current, etc., during the automatic engine stop control, wherein the automatic transmission unit is set in the drive state.
FIG. 10 is an explanatory diagram showing an adequate range of a top-dead-center engine speed during the automatic engine stop control on the basis of a level of speed ratio.
FIG. 11 is a flowchart showing the initial stage of an automatic engine stop control process.
FIG 12 is a flowchart showing the middle stage of the automatic engine stop control process.
FIG 13 is a flowchart showing the last stage of the automatic engine stop control process.
FIG 14 is a flowchart showing the initial stage of an engine restart control process.
FIG 15 is a flowchart showing the middle stage of the engine restart control process.
FIG 16 is a flowchart showing the last stage of the engine restart control process.
FIG 17 is a time chart showing a combustion cycle during the engine restart control.
FIG 18 is a time chart showing changes in engine speed during the engine restart control.
FIG. 19 is a time chart showing changes in engine speed etc., during an engine stop control, wherein an automatic transmission unit is shifted from a drive state to a neutral state.

### DETAILED DESCRIPTION OF THE INVENTION

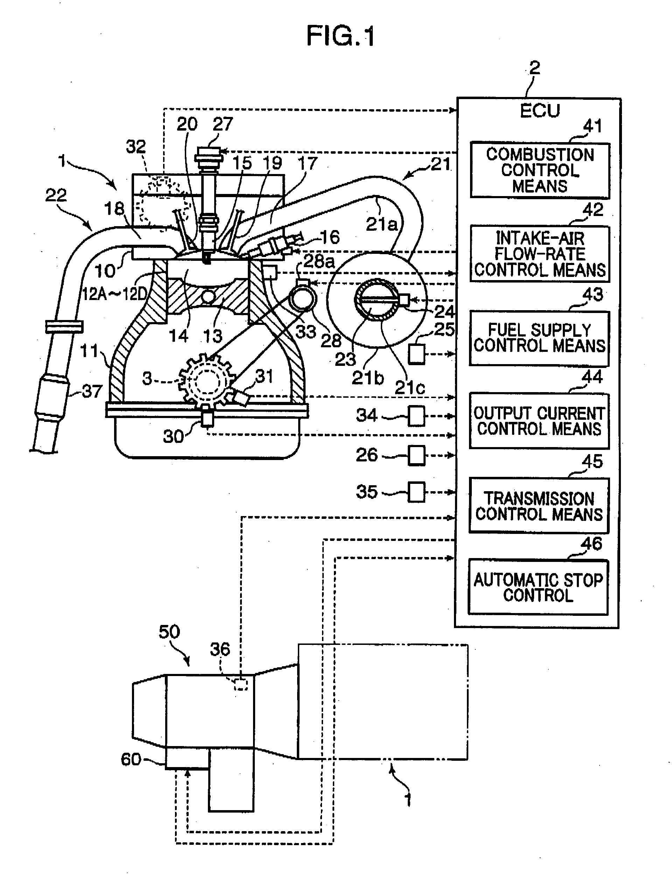

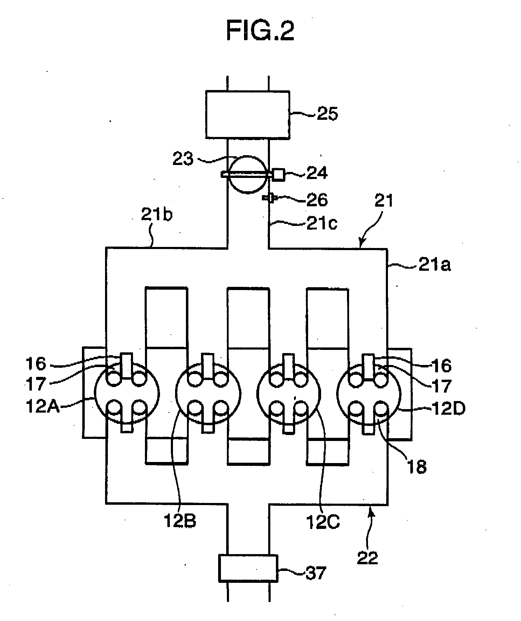

FIGS. 1 and 2 schematically show the structure of a four-stroke spark-ignition internal combustion engine having an engine starting system according to one embodiment of the present invention. This engine comprises an engine body 1 including a cylinder head 10 and a cylinder block 11, and an ECU (electronic control unit) 2 for controlling respective operations of the engine and an automatic transmission unit. The engine body 1 has four cylinders 12A to 12D, and a piston 13 connected to a crankshaft 3 is slidably fitted in each of the cylinders 12A to 12D to define a combustion chamber 14 thereabove.

The combustion chambers 14 in each of the cylinders 12A to 12D has a top wall portion provided with a spark plug 15 whose tip is exposed to the combustion chamber 14. A fuel injection valve 16 is attached to a side wall portion of the combustion chamber 14 to inject fuel directly into the combustion chamber 14. This fuel injection valve 16 is designed to be driven and opened for a period of time corresponding to a pulse width of a pulse signal entered therein from the ECU 2 so as to inject fuel in a quantity proportional to the valve open period, toward and around electrodes of the spark plug 15.

The combustion chamber 14 in each of the cylinders 12A to 12D also has an upper wall portion formed with an intake port 17 and an exhaust port 18 extending to open into the combustion chambers 14. These intake and exhaust ports 17, 18 are equipped with an intake valve 19 and an exhaust valve 20, respectively. The intake and exhaust valves 19, 20 are designed to be driven by a valve operating mechanism including a camshaft (not shown), so that respective opening/closing timings of the intake and exhaust valves 19, 20 in each of the cylinders 12A to 12D are set to allow a four-stroke combustion cycle to be performed in the cylinders 12A to 12D with a given phase differences therebetween.

The intake ports 17 and the exhaust ports 18 are connected with an intake passage 21 and an exhaust passage 22, respectively. As shown in FIG. 2, a downstream portion of the intake passage 21 on the side closer to the intake ports 17 is formed as an intake manifold with four independent passages 21a corresponding to the cylinders 12A to 12D, and respective upstream ends of the intake manifold passages 21a are in fluid communication with a surge tank 21b. An upstream portion of the intake passage 21 relative to the surge tank 21b is formed as a common intake passage 21c which is provided with intake flow rate adjusting means composed of a throttle valve 23 designed to be driven by an actuator 24. Further, an air-flow sensor 25 for detecting an intake flow rate and an intake pressure sensor 26 for detecting an intake pressure (negative pressure) are disposed, respectively, on the upstream and downstream sides of the throttle valve 23.

A portion of the exhaust passage 22 on the downstream side of an exhaust manifold for collectively receiving exhaust gas from the cylinders 12A to 12D is provided with a catalytic converter 37 for purifying the exhaust gas. For example, the catalytic converter 37 contains a three-way catalyst which exhibits a significantly high conversion rate of HC, CO and NOx when an air-fuel ratio of exhaust gas is close to a theoretical value. More specifically, the three-way catalyst has an ability of absorbing and storing oxygen therein in an oxygen-rich atmosphere or when exhaust gas has a relatively high oxygen concentration, and releasing the stored oxygen to induce a reaction with HC, CO, etc. when exhaust gas has a relatively low oxygen concentration. The catalyst to be used for the catalytic converter 37 is not limited to the three-way catalyst, but may be any other suitable catalyst having the aforementioned oxygen absorbing/storing ability, for example, the so-called lean NOx catalyst capable of purifying NOx in an oxygen-rich atmosphere.

An alternator (power generator) 28 is attached to the engine body 1 and connected to the crankshaft 3 through a timing belt or the like. This alternator 28 is internally provided with a regulator circuit 28a for controlling a current to be applied to a field coil (not shown) thereof to regulate an output voltage so as to adjust a target output current. Specifically, the alternator 28 is designed to be controlled according to a control signal sent from the ECU 2 to the regulator circuit 28a so as to produce a target output current in proportion, for example, to an electric load of a vehicle and a voltage of a battery mounted on the vehicle, when the engine is in a normal operating state.

The engine is also provided with a pair of first and second crank angle sensors 30, 31 for detecting a rotational angle of the crankshaft 3. The first crank angle sensor 30 is operable to generate a detection signal for use in detecting an engine speed. Further, the first and second crank angle sensors 30, 31 are arranged to generate detection signals with a phase lag, and these detection signals are used to detect a rotational direction and a rotational angle of the crankshaft 3, as described later in more detail.

Further, the engine starting system is associated with a cam angle sensor 32 for detecting a specific rotational position of the camshaft to discriminate the cylinders from each other, a coolant temperature sensor 33 for detecting an engine coolant temperature, an accelerator-pedal angle sensor 34 for detecting an accelerator-pedal angle corresponding to a displacement of an accelerator pedal caused by a driver's operation, and a brake sensor 35 for detecting a driver's brake operation. All of the detection signals from the above sensors are sent to the ECU 2.

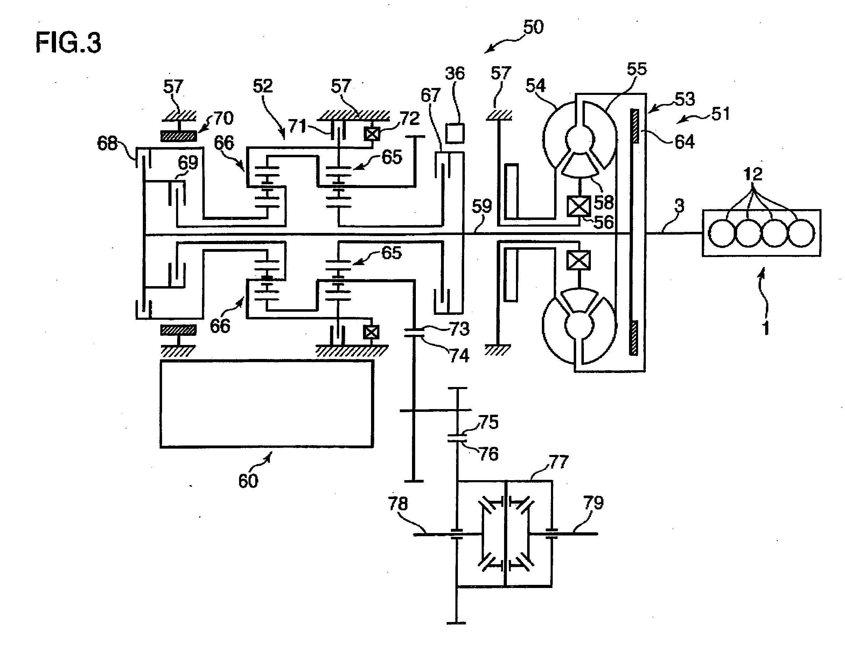

As shown in FIG. 3, the engine is connected to the automatic transmission unit 50 through the crankshaft 3 serving as an output shaft thereof. The automatic transmission unit 50 comprises a torque converter 51 connected with the crankshaft 3, and a multi-speed transmission mechanism 52 coupled with a turbine shaft 59 serving as an output shaft of the torque converter 51. The automatic transmission unit 50 is designed to be switchable between a plurality of power transmission states including a neutral state in which the transmission of a driving force from the engine to wheels of the vehicle is cut off, and a drive state in which the driving force is allowed to be transmitted to the wheels, by means of engagement/disengagement of a plurality of frictional engagement elements included in the multi-speed transmission mechanism 52, so as to have a plurality of gear ratios or speed ranges including low and high speed ranges (1st to 4th ranges) in the drive state.

The torque converter 51 includes a pump cover 53 connected with the crankshaft 3, a pump impeller 54 (on the input side of the torque converter) integrally formed with the pump cover 53, a turbine runner 55 (on the output side of the torque converter) disposed in opposed relation to the pump impeller 54, and a stator 58 disposed between the pump impeller 54 and the turbine runner 55 and attached to a case 57 through an one-way clutch 56. The turbine shaft 59 or an output shaft of the torque converter 51 is connected with the turbine runner 55. A space in the pump cover 3 is filled with oil serving as working fluid to allow a driving force of the pump impeller 54 to be transmitted to the turbine runner 55 through the working oil. A drum (constituting a forward clutch 67) 61 has an outer periphery formed with a plurality of teeth, and a turbine speed sensor 36 is disposed close to the outer periphery of the drum 61, so that a rotational speed of the turbine runner 55, or turbine speed, can be transmitted to the ECU 2 through the turbine speed sensor 36.

The torque converter 51 also includes a lockup clutch 64 disposed between the pump cover 53 and the turbine runner 55 and adapted to connect the crankshaft 3 directly to the turbine runner 55 through the cover 53. This lockup clutch 64 is connected to an oil pump (not shown) or the like through an oil pressure or hydraulic control circuit 60 having a control valve and a solenoid valve which are interposed therein. These control and solenoid valves can be controllably turned on/off to change an oil line so as to switch between a lockup state and an un-lockup state. In this embodiment, the lockup clutch 64 is designed to establish the lockup state when the vehicle is in an acceleration or constant-speed running state and in a deceleration state under the condition that the multi-speed transmission mechanism 52 is in a high-speed range.

The multi-speed transmission mechanism 52 includes first and second planetary gear mechanisms 65, 66, and a plurality of frictional engagement elements 67 to 72, such as clutches and brakes, for changing a power transmission line including the planetary gear mechanisms 65, 66. Each of the frictional engagement elements 67 to 72 are designed to be appropriately engaged/disengaged through the hydraulic control circuit 60 so as to selectively or switchably establish the neutral state, and the multi-range drive state, such as a reverse range, a plurality of forward ranges.

The frictional engagement elements 67 to 72 includes a forward clutch 67 interposed between the turbine shaft 59 and a sun gear of the first planetary gear mechanism 65, a reverse clutch 68 interposed between the turbine shaft 59 and a sun gear of the second planetary gear mechanism 66, a 3-4 clutch 69 interposed between the turbine shaft 59 and a carrier of the second planetary gear mechanism 66, a 2-4 clutch 67 for immobilizing the sun gear of the second planetary gear mechanism 66, and a low reverse brake 71 and a one-way clutch 72 interposed in parallel between each of the planetary gear mechanisms 65, 66 and the case 57. Thus, each of the frictional engagement elements 67 to 72 can be engaged/disengaged to change or cut off the power transmission line connecting to an output gear 73. Then, when the output gear 73 is rotated, the driving force will be transmitted to wheels of the vehicle, or right/left axles 78, 79 through driving gears 74, 75, 76 and a differential mechanism 77.

The above automatic transmission unit 50 is fundamentally designed to be set in the neutral state, when a shift lever disposed adjacent to a driver's seat (not shown) is positioned at an N range or to be set in the drive state, when the shift lever is positioned at at least a D range. Additionally, in this embodiment, even if the shift lever is the corresponding to the drive state (e.g. D range), the ECU 2 and the hydraulic circuit 60 are operable to automatically shift the drive state to the neutral state in a given period during an automatic engine stop process or an automatic engine restart process. The term "neutral state" herein means the state that the transmission of the driving force from the engine to the wheels is cut off. In this state, at least both of the forward clutch 67 and the reverse clutch 68 are disengaged. The term "drivel state" herein means the state that the driving force can be transmitted to the wheels. In this state, at least either one of the forward clutch 67 and the reverse clutch 68 is engaged. In this embodiment, the frictional engagement elements 67 to 72 including the lockup clutch 64 are designed to be entirely disengaged when the automatic transmission unit 50 is in the neutral state, so as to reduce a rotational resistance to be imposed on the crankshaft 3.

Further, in the automatic transmission unit 50, when the shift lever is in the D range, and the multi-speed transmission mechanism 52 is in the 1st speed range, the forward clutch and the low-reverse brake 67, 71 are, respectively, engaged and disengaged, and the one-way clutch 72 is locked. Thus, the driving force is transmitted from the crankshaft 3 to the axels 78, 79, but no driving force is transmitted in the opposite direction, or no engine braking action occurs. When the shift lever is in the D range, and the multi-speed transmission mechanism 52 is in the 2nd, 3rd or 4th speed range, the driving force is transmitted from the crankshaft 3 to the axels 78, 79, and a driving force is transmitted in the opposite direction to cause an engine braking action. The automatic transmission unit 50 may have a coast clutch disposed in parallel to the driving gear 74, to prevent the occurrence of engine braking action in the 2nd speed range.

The ECU 2 includes: combustion control means 41 operable, in response to receiving the detection signals from the sensors 25, 26, 30 to 36, to output a control signal for controlling a fuel injection quantity and a fuel injection timing of each fuel injection valve 16, and control an ignition timing of each ignition device 27 associated with the corresponding spark plugs 15 so as to execute a combustion control depending on an engine operation state; and intake flow-rate control means 42 for outputting a control signal for controlling a throttle opening to the actuator 24 of the throttle valve 23 to control an intake flow rate. Further, the ECU 2 includes: fuel-supply control means 43 for outputting a control signal to each actuator of the fuel injection valves 16 to control a fuel supply to the engine; output-current control means 44 for setting a target output current of the alternator 28; and transmission control means for switching the multi-speed transmission mechanism 52 between the neutral and drive states. Furthermore, the ECU 2 includes automatic stop control means 46 operable, when a predetermined automatic engine stop condition is satisfied, to output a control signal to the above control means 41 to 45 so as to discontinue the fuel injection to each of the cylinders 12A to 12D at a given timing to automatically stop the engine, and then execute a control for automatically restarting the engine in response to satisfaction of a restart condition, e.g. a driver's accelerator-pedal operation.

This automatic stop control means 46 is designed to execute the automatic engine stop control during running of the vehicle, and discontinue the fuel injection to each of the cylinders 12A to 12D in a relatively early stage so as to completely stop the engine (piston 13) under a given condition during vehicle running.

Specifically, the above automatic engine stop condition may include a condition that a battery voltage is a reference value or more, and an air conditioner is in an OFF state, or a condition that a vehicle speed is a given value (e.g. 10 km/h) or more. If this condition is satisfied, the automatic engine stop control will be initiated during vehicle running. Such a automatic engine stop condition may be obtained by eliminating a condition about vehicle speed, such as vehicle speed = zero, from a commonly used condition, to allow the automatic engine stop control during vehicle running to be executed based on the automatic stop control means 46. When the condition about vehicle speed is eliminated in this manner, the automatic engine stop control can also be executed after stop of the engine.

When the automatic stop control means 46 determines whether the automatic engine stop condition is satisfied, all items included in the automatic engine stop condition may be checked all together. In this embodiment, conditional items are distributed over a given period of time and separately checked. Further, in order to initiate the automatic engine stop control during vehicle running, as a final automatic engine stop condition, it is determined whether the brake sensor is in an ON state at a time when an engine speed reaches an after-mentioned deceleration fuel-cut resuming speed FC·OFF. Then, when the brake sensor is determined to be in the ON state, it is judged that an occupant intends to stop the vehicle, and the automatic engine stop control is executed.

As the result of the determination on satisfaction of the automatic engine stop control, when the automatic engine stop control is determined to be satisfied, the automatic stop control means 46 is operable to instruct the fuel-supply control means 43 to discontinue the fuel supply to each of the cylinders 12A to 12D at a given timing during vehicle running.

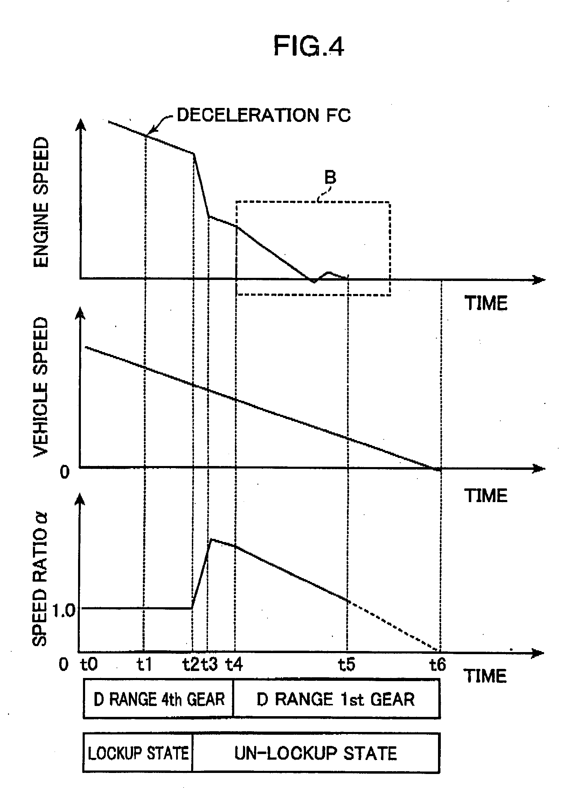

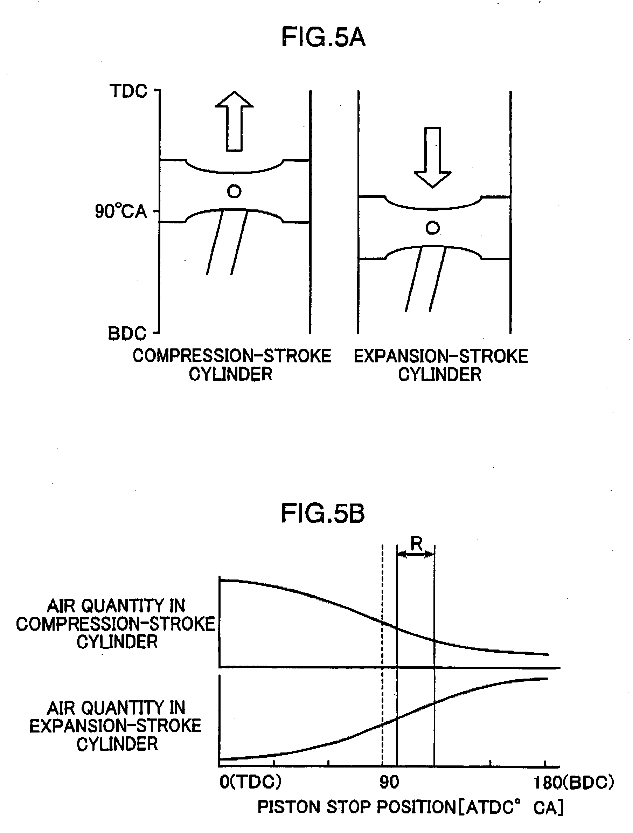

Specifically, as shown in FIG. 4, the fuel-supply control means 43 in this embodiment is designed to execute a deceleration fuel-cut (deceleration FC) control in a given speed range during deceleration so as to prevent the formation of overrich air-fuel mixture under a given condition during vehicle deceleration. Thus, when the deceleration FC control is executed, and the automatic engine stop control is determined to be satisfied, the automatic stop control means 46 is operable, when the engine speed Ne reaches to a resuming speed FC·OFF or a lower limit of the given speed range where the deceleration FC is executed, to preclude the fuel-supply control means 43 from resuming the fuel supply, so as to discontinue the fuel supply to each of the cylinders 12A to 12D. That is, when the resuming of the fuel supply after the deceleration FC period is precluded in this manner, the deceleration FC control can be continued to achieve the automatic engine stop control. In this regard, when the engine speed reaches the resuming speed FC·OFF, the after-mentioned speed ratio a is 1 or more. Thus, if the fuel supply is discontinued when the speed ratio a is 1 or more, the piston 13 can be stopped during vehicle running with a high probability. Further, the after-mentioned control may be executed in combination to allow the piston 13 to be stopped at a position falling within the after-mentioned adequate range R (see FIG. 5) with a high probability.

If the deceleration FC control of the fuel-supply control means 43 is not executed, the multi-speed transmission mechanism 52 of the automatic transmission unit 50 will be set in the neutral state to execute a basic control of the automatic stop control means 46. This basic control will be described later.

Returning to the control of the automatic stop control means 46 to be executed when the deceleration FC control is executed, when the vehicle running in the high-speed range is decelerated, the lockup clutch 64 of the torque converter 51 is engaged to establish the lockup state of the automatic transmission unit 50. Then, when the engine speed goes down in the lockup state, and reaches a given lockup release speed NIu, the lockup clutch 64 is disengaged to shift the lockup state to the un-lockup state. The automatic transmission unit 50 in the lockup state can efficiently effect an engine braking action, and provide enhanced power generation efficiency in the alternator 28 and excellent response to re-acceleration. Thus, it is desirable to continue the lockup state in the automatic transmission unit 50 as long as possible. For this purpose, in this embodiment, the lockup release speed NIu is set, for example, at 1200 to 1300 rpm, and the resuming speed FC·OFF is set at a value, for example 900 rpm, which is less than the lockup release speed NIu. The disconnection of the lockup clutch 64 (shift to un-lockup state) during vehicle running makes it difficult to efficiently transmit a driving force from the axles 78, 79 to cause acute drop in engine speed. Thus, the resuming speed FC·OFF can be set at a lower value than the lockup release speed NIu to maximize advantages to be obtained from the lockup state. Then, the lockup state can be shifted to the un-lockup state to rapidly lower the engine speed to the resuming speed FC·OFF, to determine whether he automatic engine stop condition (ON/OFF state of the brake sensor 35 in this embodiment) is satisfied, in an early stage.

When the multi-speed transmission mechanism 52 is manually set in the D range, and automatically set in the medium/high speed range including the 2nd speed range, the driving force is transmitted from the axles 78, 79 to the crankshaft 3 to cause an engine braking action. Thus, even if the fuel supply from the fuel-supply control means 43 is discontinued in an early stage, the crankshaft 3 is rotated by an engine braking action to cause difficulty in completely stopping the piston 13 during vehicle running. With this point in view, after the engine speed is lowered to the resuming speed FC·OFF or less, the multi-speed transmission mechanism 52 is shifted down to the first speed range causing no engine braking action to prevent the driving force from the axles 78, 79 from being transmitted to the crankshaft 3 so as to allow the piston 13 to be completely stopped even during vehicle running.

The above control of the automatic stop control means 46 and other components in this embodiment can be summarized as follows. In the state when the multi-speed transmission mechanism 52 manually set in the D range is automatically set in the high-speed range, if the accelerator-pedal censor is changed to the OFF state or the brake sensor is additionally changed to the ON state, the vehicle is decelerated, and the engine speed Ne is lowered along with the deceleration, as shown in FIG. 4. During this deceleration, the lockup clutch 64 is engaged to establish the lockup state in the automatic transmission unit 50. Then, at Time t1 when the engine speed Ne reaches resuming the speed FC·OFF, for example a given value of 1200 rpm or more (1400 rpm in this embodiment), the fuel-supply control means 43 executes the deceleration FC control for discontinuing the fuel supply to each of the cylinders 12A to 12D to prevent the formation of overrich air-fuel mixture.

In this state, the engine speed Ne is gradually lowered. Then, when the engine speed Ne reaches lockup release speed NIu (a given value in the range of 1200 to 1300 rpm in this embodiment) at Time t2, the lockup clutch 64 is disengaged at the time to shift the automatic transmission unit 50 from the lockup state to the un-lockup state, so that a lowering rate of the engine speed Ne is increased or the engine speed Ne is rapidly lowered. This lowered engine speed Ne reaches a value corresponding to an engine braking action through the torque converter 51 at Time t3, and the lowering rate of the engine speed is reduced at the time. Then, at Time t4 when the engine speed reaches the resuming speed FC·OFF, the multi-speed transmission mechanism 52 is shifted to the 1st speed range. In this embodiment, just before Time t4 or this shifting down, the engine speed Ne reaches the resuming speed FC·OFF. Before the engine speed reached the resuming speed FC·OFF, or in a period from Time 2 when the automatic transmission unit 50 is shifted to the un-lockup state to a time when the engine speed reaches the resuming speed FC·OFF, a determination on whether the automatic engine stop condition is satisfied or whether the automatic engine stop control is initiated is performed. In this embodiment, as one of the automatic engine stop condition, it is determined whether the brake sensor 35 is in the ON state. Then, in a period from Time t4 to Time t5, the automatic stop control means 46 executes the after-mentioned control when the multi-speed transmission mechanism 52 is manually set in the D range, to stop the piston 13 at a position falling within the adequate range for restart. Then, as indicated by the dashed area in FIG. 4, after the piston is stopped at a position falling within the adequate range (Time t5), the vehicle is further decelerated, and then stopped at Time t6. As above, according to this system, the piston 13 can be completely stopped during vehicle running.

This automatic stop control means also executes the automatic engine restart control as follows. Firstly, an initial combustion is induced in a compression-stroke cylinder (whose piston is stopped in a compression stroke range when the engine is stopped) to move the piston downward so as to move an expansion-stroke cylinder (whose piston is stopped in an expansion stroke range when the engine is stopped) upward to increase an in-cylinder pressure thereof. Then, fuel is injected into the expansion-stroke cylinder, and an obtained air-fuel mixture is ignited and burnt. Further, a certain quantity of air for combustion is assured in the combustion chamber in the compression-stroke cylinder after the initial combustion, and a certain quantity of fuel suitable for the air quantity is supplied thereinto at an appropriate timing after the initial combustion. Then, when the piston of the compression-stroke cylinder is moved upward and beyond a top dead center in a compression stroke, re-combustion is induced in the compression-stroke cylinder. That is, during the automatic engine restart control, if a piston stop position is in the after-mentioned adequate range, the engine is reversely operated at an initial stage of the restart, then normally operated.

In order to adequately restart the engine only by igniting a fuel injected into a specific cylinder fundamentally without using a starter motor or the like, it is required to reliably obtain sufficient combustion energy from combustion of an air-fuel mixture in the expansion-stroke cylinder, so as to allow the piston of another cylinder which will subsequently reach a top dead center in a compression stroke (compression TDC) to pass through the compression TDC against a compressive reaction force therein. Thus, a sufficient quantity of air should be ensured in the expansion-stroke cylinder whose piston is in an expansion-stroke range after stop of the engine.

As shown in FIGS. 5A and 5B, the respective pistons 13 of the compression-stroke and expansion-stroke cylinders are moved in opposite directions because these cylinders are out of phase by 180°CA. If the piston 13 of the expansion-stroke cylinder is located on the side of a bottom dead center (BDC) relative to a stroke midpoint, the expansion-stroke cylinder can have a larger air quantity to obtain sufficient combustion energy. However, if the piston 13 of the expansion-stroke cylinder is located at a position excessively close to the BDC, an air quantity in the compression-stroke cylinder will be excessively reduced to cause difficulties in sufficiently obtaining combustion energy for reversely rotating the crankshaft 3.

In contrast, if the piston 13 of the expansion-stroke cylinder 12 can be stopped at a position falling within a given adequate range R slightly on the side of BDC from the midpoint of the expansion stroke (crank angle after compression TDC = 90°CA), for example, a range of 100°CA to 120°CA, a given quantity of air will be ensured in the compression-stroke cylinder to allow the initial combustion to produce combustion energy to the extent capable of rotating the crankshaft 3 reversely and slightly. In addition, the expansion-stroke cylinder will have a larger quantity of air, so that combustion energy for normally rotating the crank shaft 3 can be sufficiently produced to reliably restart the engine.

For this purpose, the automatic stop control means 46 in the ECU 2 is operable to control the intake flow-rate control means 42, the fuel-supply control means 43, the output-current control means 44 and the transmission control means 45, so as to allow the piston 13 to be stopped at a position falling within the adequate range R. The control of the automatic stop control means 46 in this embodiment is varied depending on whether the deceleration fuel-cut control for preventing the formation of overrich air-fuel mixture is executed. Firstly, an automatic engine stop control without the deceleration fuel-cut control will be described below.

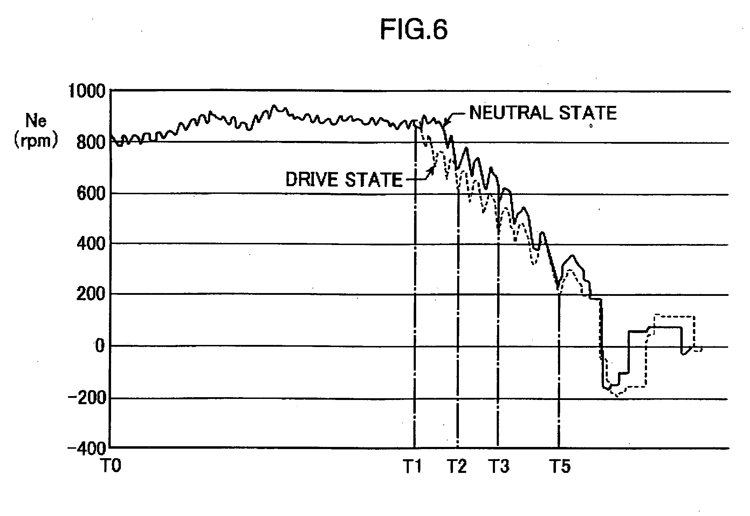

As shown in FIG. 6, at Time T0 when the automatic engine stop condition is fully satisfied, the automatic stop control means 46 executes a control for setting an engine target speed at a value greater than a normal idling speed without the automatic engine stop control to stabilize the engine speed. For example, when the engine is automatically stopped after the multi-speed transmission mechanism 52 is shifted to the neutral state (while keeping the shift lever in the D range), in an engine having a normal idling engine speed of 650 rpm (the multi-speed transmission mechanism 52 is in the drive state) (indicated by the solid line in FIG. 6), the target speed is set at about 810 rpm, and a control for stabilizing the engine speed Ne at a value slightly greater than the normal idling speed is executed. Then, at Time T1 when the engine speed Ne is stabilized at the target speed, the fuel injection is discontinued to lower the engine speed Ne.

As above, when the multi-speed transmission mechanism 52 is set in the neutral state during the automatic engine stop control, the engine speed is stabilized, and thereby the intake flow-rate control means 42 and the output-current control means 44 can be controlled only based on the engine speed to stop the piston 13 at a position falling within the adequate range R at a high probability.

As compared to the control performed in the drive state, when the multi-speed transmission mechanism 52 is set in the neutral state, an external load to be imposed on the engine becomes smaller, and thereby the engine speed can be readily stabilized as described above. On the other hand, in re-acceleration of the vehicle, the multi-speed transmission mechanism 52 has to be shift from the neutral state to the drive state. This causes poor response to an occupant's accelerator pedal operation or the like. Thus, in the system according to this embodiment, when the deceleration fuel-cut control is executed, the multi-speed transmission mechanism 52 is kept in the drive state, and the deceleration fuel-cut (FC) control is utilized. Specifically, the automatic stop control means is operable to preclude the deceleration FC control from resuming the fuel injection so as to automatically stop the engine. Further, when the multi-speed transmission mechanism 52 is kept in the drive state while precluding the resuming of the fuel injection, the automatic stop control means 46 is operable to allow the multi-speed transmission mechanism 52 manually set in the D range to be shifted down at a given timing before vehicle stop to the low-speed range (1st speed range in this embodiment) causing no engine braking action, so as to completely stop the piston 13 during vehicle running.

Before this shifting down, the multi-speed transmission mechanism 52 is set in the drive state and the high-speed range causing an engine braking action. That is, the power transmission line from the axles 78, 79 is connected to the crankshaft 79. This is likely to cause instability in engine speed, of instability in lowering rate of the engine speed (indicated by the dashed line in FIG. 6), as compared to the multi-speed transmission mechanism 52 set in the neutral state.

In this system, the automatic stop control means 46 is operable, in response to receiving respective output from the crank angle sensors 30, 31 and the turbine speed sensor 36, to detect a speed ratio a (= Te/Ne) of the speed Te of the turbine runner 55 to the engine speed Ne (rotational speed of the crankshaft 3), and control the output-current control means 44 and the transmission control means 45 depending on whether the detected speed ratio a is equal to or greater than, or less than a reference value (1 in this embodiment), to adjust an external load relative to the engine. Thus, adverse affects of the external load from the axles 78, 79 or the like can be absorbed to allow the piston 13 to be stooped within the adequate range R at a high probability. In FIG 6, the solid line indicates a time chart showing changes in engine speed in a first type where the multi-speed transmission mechanism 52 is set in the neutral state, and the dashed line indicates a time chart showing changes in engine speed in a second type where the multi-speed transmission mechanism 52 is set in the drive state, and the speed ratio is less than 1. Thus, as compared to the first type in the neutral state, the second type has a large lowering rate of the engine speed.

This automatic engine stop control will be more specifically described firstly in connection with one example where the multi-speed transmission mechanism 52 is set in the neutral state, and then in connection with another example where the multi-speed transmission mechanism 52 is set in the drive state.

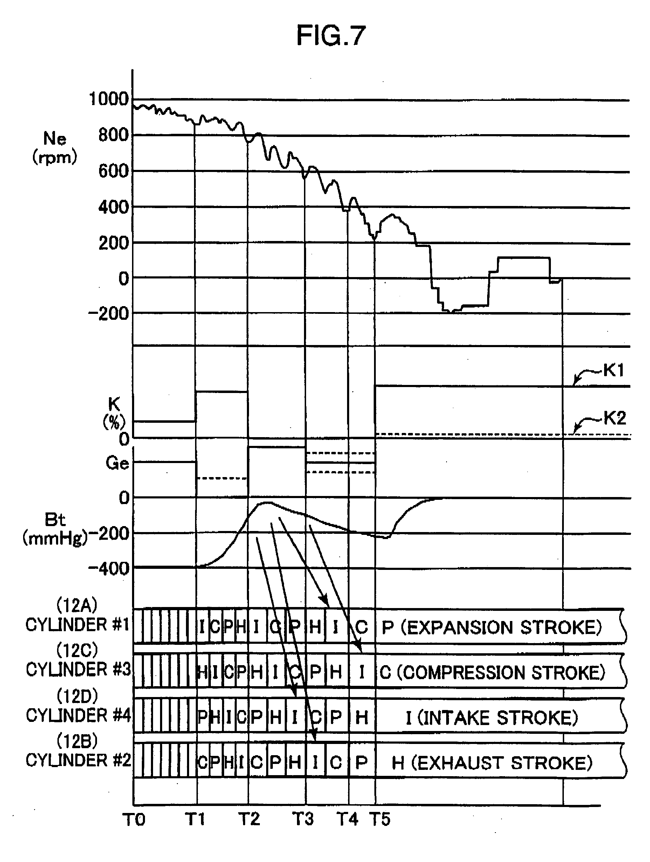

As shown in FIG. 1, in the initial stage of the automatic engine stop control or at Time T1 when the fuel injection is discontinued, the intake flow-rate control means 42 executes a control for increasing the opening K of the throttle valve 23, for example 30 % of a full throttle opening, to increase a boost pressure (intake pressure) Bt in such a manner that an intake-air quantity to be supplied into the cylinder 12A to 12D is set at a value greater than a minimum intake-air quantity required for maintaining an engine operation, by a given quantity, so as to ensure a scavenging in each of the cylinder 12A to 12D. Simultaneously, at Time T1 when the fuel injection is discontinued, the output-current control means 44 executes a control for setting a target output current Ge of the alternator 28 at a value (indicated by the dashed line in FIG. 7) less than that at Time T0 when the automatic engine stop condition is satisfied, preferably zero (indicated by the solid line in FIG. 7), to reduce a rotational friction of the crankshaft 3.

Then, at Time T2 when the engine speed Ne is determined to be lowered to a predetermined reference speed N2 (e.g. 790 rpm) or less, the throttle valve 23 is closed. Consequently, after Time T2 when the throttle valve 23 is closed, the boost pressure Bt starts declining to reduce an intake-air quantity to be supplied to each cylinder of the engine. An air sucked into the common intake passage 21c during the period between Time T1 when the throttle valve 23 is open and Time T2 when the throttle valve 23 is closed, is introduced through the surge tank 21b and the intake manifold passages 21a to the cylinder #4 or 12D, the cylinder #2 or 12B, the cylinder #1 or 12A and the cylinder # 3 or 12C which reach an intake stroke in this order, with a given transport delay therebetween. Thus, Time T1 when the throttle valve 23 is open and Time T2 when the throttle valve 23 is closed can be set in consideration with the transport delay of the intake air to allow the cylinder #1 or 12A which will be in an expansion stroke after stop of the engine, to be supplied with a greater quantity of air as compared to the cylinder #3 or 12C which will be in a compression stroke when the engine is stopped.

At Time T2, the target output current Ge of the alternator 28 is temporarily increased. Then, at Time T3 when an engine speed at a top dead center (TDC engine speed) ne falls within a given range, the target output current Ge of the alternator 28 is adjusted at a value corresponding only to the engine speed Ne to allow the engine speed Ne to be controllably lowered along a reference curve based on the result of an experimental test performed in advance, as described later in more detail.

During the course of the above automatic engine stop control, after Time T1 when the fuel injection is discontinued, kinetic energy having the crankshaft 3, a flywheel and others is consumed by mechanical loss due to frictional resistance and pumping loss in the cylinders 12A to 12D, and the crankshaft 3 of the engine is rotated several times by an inertia force. For example, a 4-cylinder 4-stroke engine is stopped after having a compression TDC about 10 times.

Then, in the cylinder 12C whose piston will reach a compression TDC after Time T5 when the piston of the cylinder 12A passes through the last compression TDC just before stop of the engine, the piston 13 of the cylinder 12C is pushed back due to a compressive reactive force from an in-cylinder air pressure increased in conjunction with the upward movement of the piston 13 caused by the inertia force, and the crankshaft 3 is reversely rotated. This reverse rotation of the crankshaft 3 increases the air pressure in the expansion-stroke cylinder 12A. Then, due to the resulting compressive reaction force, the piston 13 of the expansion-stroke cylinder 12A is pushed back toward a BDC, and thereby the crankshaft starts normally rotating again. These normal and reverse rotations of the crankshaft 3 are repeated several times to cause reciprocating motion of the pistons 13, and then the pistons 13 are finally stopped. Each stop position of the pistons 13 is almost determined by the balance between the respective compressive reaction forces in the compression-stroke cylinder 12C and the expansion-stroke cylinder 12A. Further, the piston stop positions are affected by a frictional resistance of the engine, and varied depending on a rotational inertia force of the engine or the level of the engine speed Ne at Time T5 when the piston of the cylinder 12A passes through the last compression TDC.

Thus, in order to stop the piston 13 of the expansion-stroke cylinder 12a at a position falling within the adequate range R for restart of the engine after the completion of the automatic engine stop control, it is required to adjust respective intake-air quantities for the expansion-stroke and compression-stroke cylinders 12A, 12C so as to allow respective compressive reaction forces in the expansion-stroke and compression-stroke cylinders 12A, 12C to have a sufficiently high value, and allow the compressive reaction force in the expansion-stroke cylinder 12A to be greater than that in the compression-stroke cylinder 12C by a given value or more. For this purpose, in this embodiment, at Time T1 when the fuel injection is discontinued, an opening K of the throttle valve 23 is set at a larger value to supply a given quantity of air to each of the expansion-stroke and compression-stroke cylinders 12A, 12C. Then, at Time T2 when a given time lapses from Time T1, the throttle valve 23 is closed, or the opening K is reduced, to adjust the intake-air quantities.

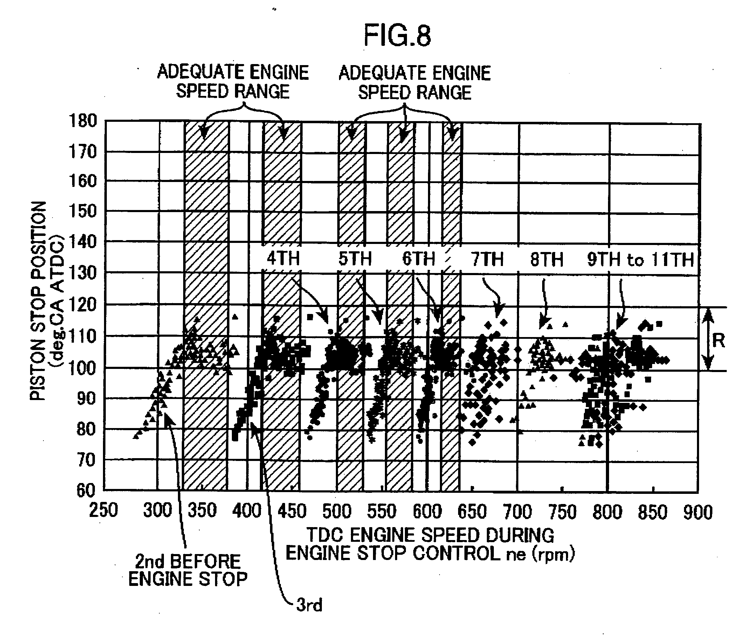

However, even in the same model of engines, they actually have an individual difference, for example, in the shape of the throttle valve 23, the intake ports 17, etc., and thereby the behavior of air flowing therethrough will be changed. This causes fluctuation in intake-air quantity, and the piston stop position is likely to be out of the adequate range R even if the opening of the throttle valve 23 is controlled as described above. As to this problem, the present invention focuses on the fact that, during the process of lowering in the engine speed Ne according to the above automatic engine stop control, there is a specific correlation between an engine speed ne at a time when each piston of the cylinders 12A to 12D passes through a compression TDC (TDC engine speed) and a piston stop position in the expansion-stroke cylinder at the time of stop of the engine, as seen from one example illustrated in FIG. 8. Based on this fact, during the process of lowering in the engine speed Ne after Time T1 when the fuel injection is discontinued, an engine speed at the time when each piston 13 of the cylinders passes through a compression TDC, or a TDC engine speed ne, is detected, and the target output current of the alternator 28 is controlled in accordance with the detection value of the TDC engine speed ne to adjust the lowering rate of the engine speed Ne so as to allow the piston to be stopped at a position falling within the adequate range R with a high probability.

FIG 8 graphically shows the relationship between a TDC engine speed ne and a piston stop position, wherein the multi-speed transmission mechanism 52 is in the neutral state. In FIG. 8, the vertical and horizontal axes represent the piston stop position and the TDC engine speed ne, respectively. The TDC engine speed ne is measured at a time when each piston 13 of the cylinders 12A to 12D of the engine driven by an inertia force under the conditions that the fuel injection is discontinued at Time T1 when the engine speed Ne is increased up to a given value, and the throttle valve 23 is opened for a given period of time from Time T1, as mentioned above. The piston stop position is measured from the expansion-stroke cylinder 12A at the time of stop of the engine. These measurements can be repeated to obtain a distribution chart indicating the correlation between the TDC engine speed ne and the piston stop position in the expansion-stroke cylinder 12A, during the process of the automatic engine stop control.

Based on the distribution chart, the correlation between the TDC engine speed ne and the piston stop position in the expansion-stroke cylinder 12A, during the process of the automatic engine stop control, can be found. In an example illustrated in FIG. 8, it can be found that, if each of the sixth to second TDC engine speeds to the last TDC engine speed just before stop of the engine falls within a range indicated by hatched lines, the measured stop positions of the above piston 13 fall within the adequate range for restart of the engine (100 to 120°CA after a compression TDC). Particularly in the second TDC engine speed ne to the last TDC engine speed just before stop of the engine, as shown in FIG. 8, the TDC engine speed ne is in the range of about 280 to 380 rpm, and the measured piston stop positions gradually come closer to TDC as the TDC engine speed ne is lowered, in a range where the TDC engine speed ne has a relatively low value of about 320 rpm or less. In contrast, as seen in FIG. 7, in a range where the TDC engine speed ne has a relatively high value of greater than 320 rpm, irrespective of the value of the TDC engine speed ne, the measured piston stop positions of the piston 13 become approximately constant, and fall substantially within the adequate range R. Thus, in order to allow the TDC engine speed ne to fall with the hatched zone, the automatic stop control means 46 is operable to instruct the output-current control means 44 to adjust the target output current, and as needed to reduce the number of passages through a compression TDC before engine stop, so as to allow the piston 13 to be stopped at a position falling within the adequate range R with a high probability.

An automatic engine stop control of the second type of automatic stop control means 46, in which the multi-speed transmission mechanism 52 is set in the drive state, is fundamentally the same as that in the aforementioned first type set in the neutral state, except that the speed ratio a containing element of the turbine speed Te is detected to measure an external load, and the output-current control means 44 and transmission control means 45 are instructed to execute a control for adjusting an engine load based on the speed ratio a so as to minimize adverse affects of the external load. The adjustment of the opening K of the throttle valve 23 is the same as that in the first type set in the neutral state, and thereby its description will be omitted.

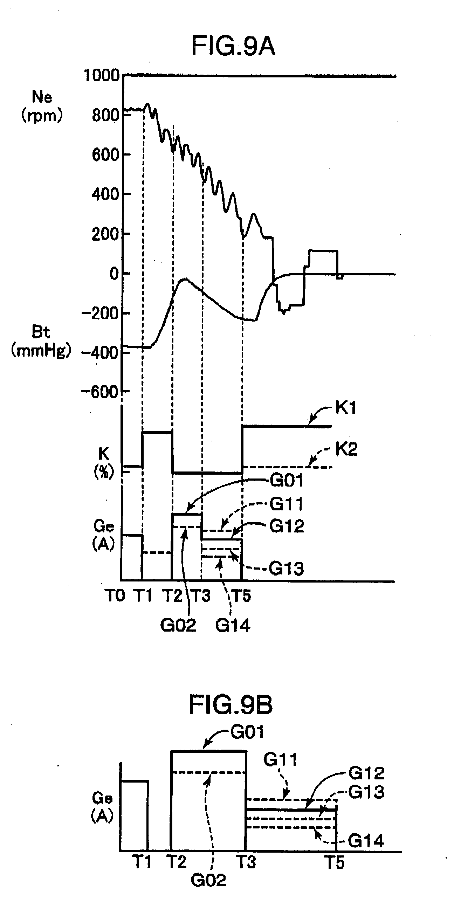

Specifically, as shown in FIGS. 9A and B, at Time T1 of discontinuation of the fuel injection, the output-current control means 44 executes a control for reducing the target output current Ge of the alternator 28 to a value less than that at Time T0 of satisfaction of the automatic engine stop condition (indicated by the dashed line in FIG 8), preferably zero (indicated by the solid line in FIG. 8).

Further, during a period from Time T1 of discontinuation of the fuel injection and Time T2 when the engine speed Ne is determined to be lowered to the reference speed N2 (e.g. 790 rpm) or less, the automatic stop control means 46 detects the speed ratio a, and instruct the transmission control means 45 in accordance with the detected speed ratio a. Specifically, the automatic stop control means 46 is operable to detect the engine speed Ne and the rotational speed Te of the turbine runner 55 from the crank angle sensors 30, 31 and the turbine sensor 36, and measure the speed ratio a. Then, when the detected speed ratio a is equal to or greater than a reference value (1 in this embodiment), the automatic stop control means 46 is operable to instruct the transmission control means 45 to maintain the drive state in the multi-speed transmission mechanism 52. If the detected speed ratio a is less than 1, the automatic stop control means 46 is operable to instruct the transmission control means 45 to shift the multi-speed transmission mechanism 52 from the drive state to the neutral state.

Specifically, when the detected speed ratio a is less than 1, the speed of the turbine runner 55 is lower than the speed of the crankshaft 3, and thereby some external load is imposed on the engine. Thus, the multi-speed transmission mechanism 52 is set in the neutral state to reduce the external load imposed on the engine. When the speed ratio a is equal to or greater than 1, the speed of the turbine runner 55 is higher than the speed of the crankshaft 3, and thereby the crankshaft 3 is rotated by the rotation of the turbine runner 55 or almost no external load is loaded on the engine. Thus, the multi-speed transmission mechanism 52 is set in the drive state to get ready for quick response to re-acceleration.

Then, at Time T2 when the engine speed Ne is determined to be lowered to a predetermined reference speed N2 (e.g. 790 rpm) or less, due to the discontinuation of the fuel injection at Time 1, the automatic stop control means 46 is operable to instruct the output-current control means 44 to temporarily increase the target output current Ge of the alternator 28. This increment in the target output current is instructed by the automatic stop control means 46.

Specifically, when the detected speed ratio a is equal to or greater than a given reference value (1 in this embodiment), the automatic stop control means 46 sets the target output current Ge a given value G01 (80A in this embodiment). When the detected speed ratio a is less than 1, the automatic stop control means 46 sets the target output current Ge at a given value G02 (60A in this embodiment) less than the given value G01. In this embodiment, if the speed ratio a is less than 1 in the period from the course from Time T1 of discontinuation of the fuel injection to Time T2 of the determination, the multi-speed transmission mechanism is set in the neutral state. Thus, the target output current Ge of the alternator 28 is set at the given value G01 when the multi-speed transmission mechanism 52 is in the drive state, or set at the given value G02 less than the given value G1 when the multi-speed transmission mechanism 52 is in the neutral state.

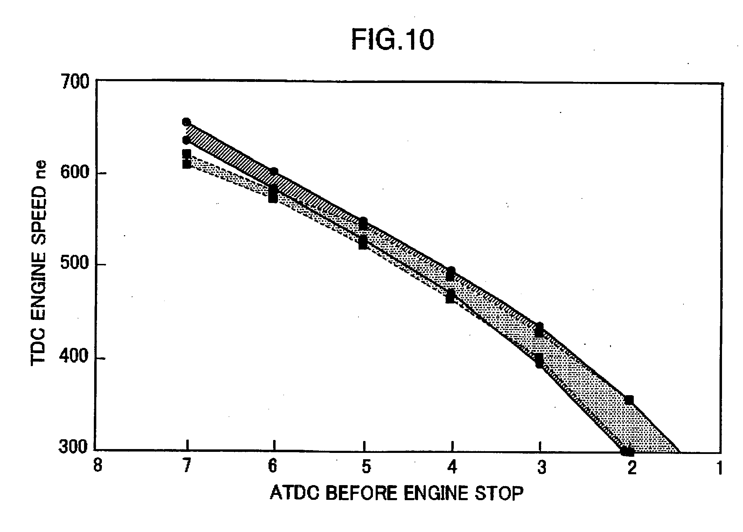

FIG. 10 shows an adequate range r of TDC engine speed ne allowing the piston 13 to be stopped within the adequate range R with a high probability, for two cases: one where the speed ratio a is equal to or greater than a give reference value (1 in this embodiment); and the other where the speed ratio a is less than 1, wherein the horizontal axis represents the number of passages through a compression TDC before stop of the piston, and the vertical axis represents the BDC engine speed ne. In FIG. 10, the shaded zone indicates the adequate range r of TDC engine speed ne in the latter case where the speed ratio a is small, and the dotted zone indicated the adequate range r of TDC engine speed ne in the former case where the speed ratio a is large. As described above, in the period from Time T2 to Time T3, the target output current Ge can be varied between the two different values G01, G02, depending on the speed ratio a. Thus, after discontinuation of the fuel supply, the difference in the adequate range r of TDC engine speed ne due to difference in speed ratio a can be gradually reduced by the time of passing through the 4th compression TDC to the last compression TDC just before stop of the engine, and the two adequate ranges can be smoothly joined together after passing through the 4th compression TDC to the last compression TDC just before stop of the engine, to facilitate the subsequent control of the engine speed Ne.

Further, when the multi-speed transmission mechanism 52 is set in the drive state, after Time T3 when the TDC engine speed ne falls within a given range, the transmission control means 45 executes a control for adjusting the target output current Ge of the alternator 28 at one selected from values G11 to G14 corresponding to a lowering rate of the engine speed Ne, based on the speed ratio a, to lower the engine speed Ne along a reference line as shown in FIG. 10, so as to minimize adverse affects of an external load to be imposed on the engine, under the condition that a driving force can be transmitted to the wheels.

As to the adjustment of the target output current after Time T3, the target output current is increased as the speed ratio a has a larger value. Specifically, as shown in FIG 9B, in a period from Time T3 to the time of passing through the last compression TDC just before stop of the engine, the target output current is adjusted to have one of the values G11, G12, G13 and G14 to be selected in descending order of the speed ratio a. The number of these predetermined values is not limited to a particulate value, but any suitable plural number may be used. Further, such a value of the target output current corresponding to the speed ratio a may be determined in advance based on experimental data or the like.

When the multi-speed transmission mechanism 52 is shifted to the neutral state according to the speed ratio a, after Time T3 when the TDC engine speed ne falls within the given range, the transmission control means 45 executes a control for adjusting the target output current Ge of the alternator 28 at a value corresponding to only the engine speed Ne, to lower the engine speed Ne along a reference line predetermined based on experimental data or the like, as shown in FIG. 10,

Then, after Time T5 of passing through the last compression TDC just before stop of the engine, the piston 13 is reciprocatingly moved several times in the reverse and normal directions of the crankshaft 3, and then stopped. This stop position of the piston 13 is approximately determined by the balance between the respective compressive reaction forces in the compression-stroke cylinder 12C and the expansion-stroke cylinder 12A. Further, the piston stop positions are affected by a frictional resistance of the engine, and varied depending on a rotational inertia force of the engine or the level of the engine speed Ne at Time T5 when the piston of the cylinder 12A passes through the last compression TDC. According to the above controls in the transmission control means 45 and the output-current control means 44 based on the instruction from the automatic stop control means 46, the piston can be stopped at a position falling within the adequate range R with a high probability even if the multi-speed transmission mechanism 52 is manually set in the D range.

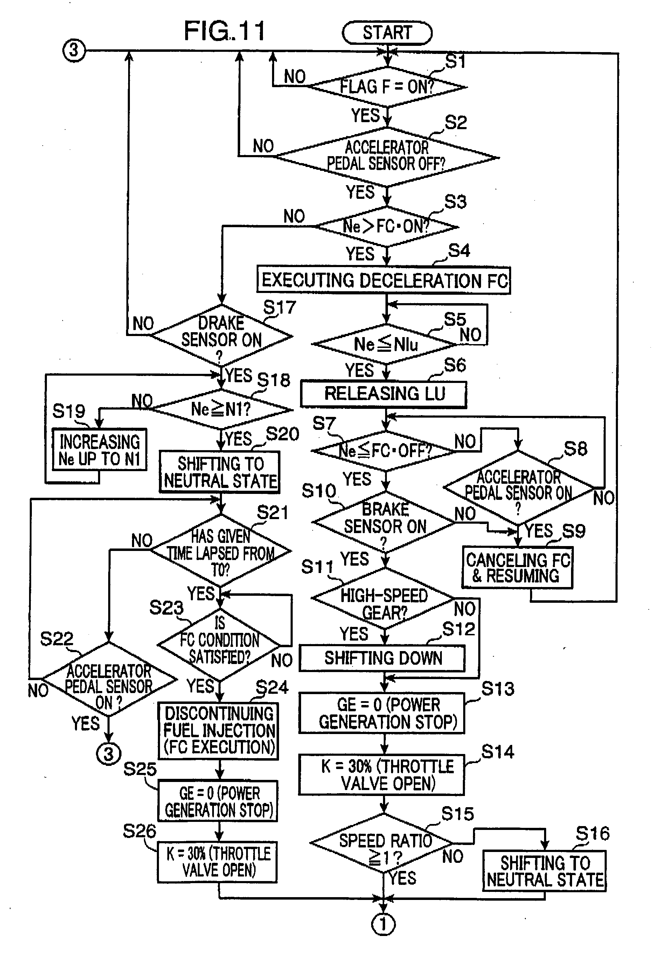

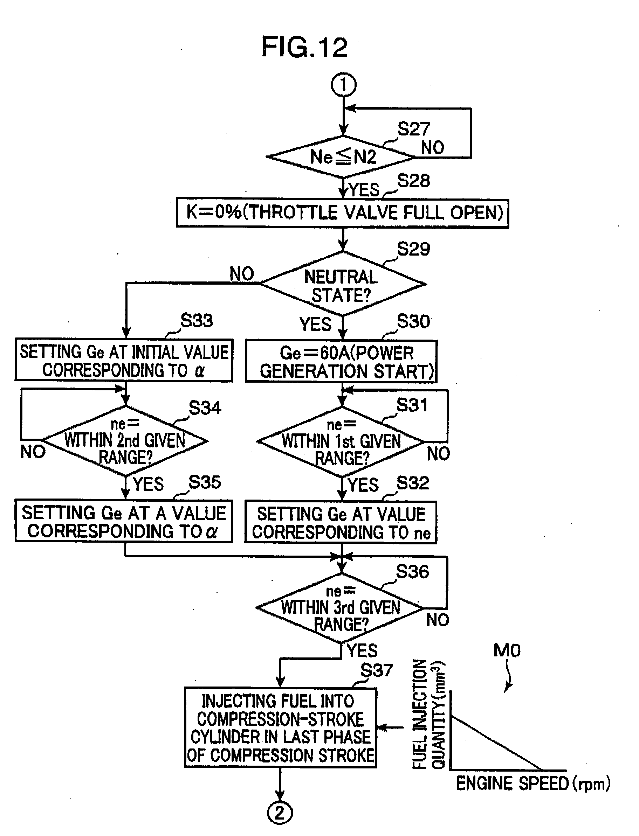

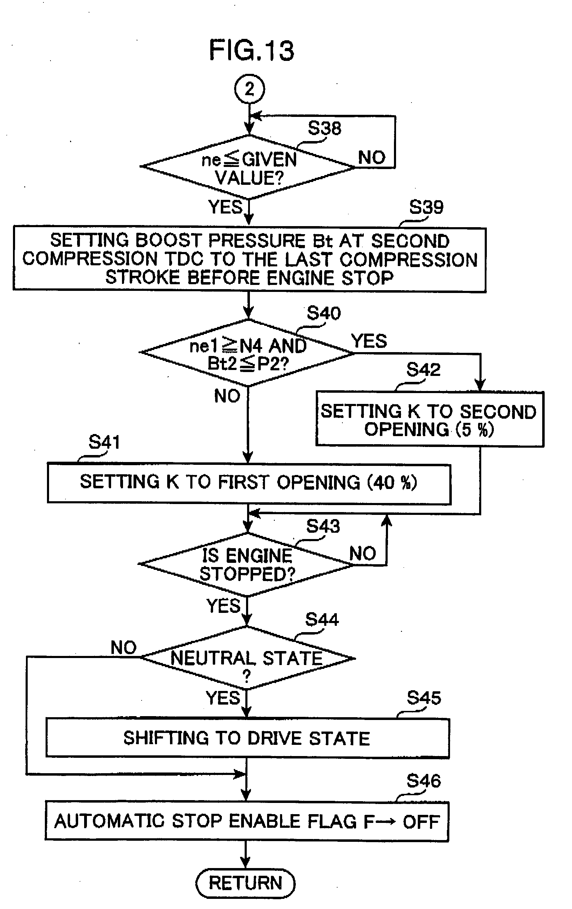

With reference to flowcharts illustrated in FIGS. 11 to 13, the automatic engine stop control process based on the automatic stop control means of the ECU will be described below. Upon starting this control process, it is determined whether an automatic stop enable flag F is ON (Step S1). This automatic stop enable flag F indicates whether the engine is in an allowable operating state for the automatic engine stop control. More specifically, if all items of the predetermined condition, such as a given value (e.g. 10 km/h) or more of vehicle speed, a given value or less of steering angle, a reference value or more of battery voltage and an OFF state of air conditioner, are satisfied, the engine is determined to be in the allowable operating state for the automatic engine stop control, and then the automatic stop enable flag F will be set to ON. This automatic stop enable flag F is also one automatic engine stop condition. For example, the after-mentioned automatic engine stop process is initiated even during vehicle running, in response to the ON state of the automatic stop enable flag F having the ON condition including a given value (e.g. 10 km/h) or more of vehicle speed.

If the determination in Step S1 is YES, it will be determined whether the accelerator pedal sensor 34 is in an OFF state (Step S2). If the determination in Step S2 is YES or it is determined that the vehicle is in a deceleration state, it will be determined whether the engine speed Ne is greater than a reference value for cutting fuel during deceleration (deceleration fuel-cut reference value) FC·ON preset at about 1100 rpm (Step S3). If the determination in Step S3 is NO, the process will skip to Step S17.

If the determination in Step S3 is YES or it is determined that the engine speed Ne is greater than the deceleration fuel-cut reference value FC·ON, the deceleration fuel-cut (FC) control will be executed (Step S4).

Then, the automatic stop control means 46 determines whether the lockup clutch 64 is engaged. When it is determined that the lockup clutch 64 is engaged, it is determined whether the engine speed Ne is equal to or less than the lockup release speed NIu (Step S5). If it is determined that the engine speed Ne is equal to or less than the lockup release speed NIu (YES in Step S5), the lockup clutch 64 is disengaged to release the lockup state (Step S6). Upon disengagement of the lockup clutch 64, the relation between the turbine runner 55 and the crankshaft 3 which have been moved together is changed, and the speed Te of the turbine runner 55 becomes different from the speed of the crankshaft 3 (engine speed Ne). Generally, during deceleration of the vehicle, the speed of the turbine runner 55 is greater than the speed of the crankshaft 3. Thus, after disengagement of the lockup clutch 64, the speed of the crankshaft 3 is quickly lowered. If it is determined at Step S5 that the lockup clutch 64 is not engaged, Step S6 will be skipped, but not shown in FIG. 11.

Then, it is determined whether the engine speed Ne is lowered to a value equal to or less than a fuel resuming reference value FC·OFF set at about 900 rpm (Step S7). When the determination at Step S7 is NO, it is determined whether the accelerator pedal sensor 34 is in an ON state (Step S8). If the determination in Step S8 is NO or it is determined that the accelerator pedal sensor 34 is in an OFF state, the process will returns to Step S7.

When the determination in Step S7 is YES, it is determined whether the brake sensor 35 is in an ON state (Step S10). If the determination in Step S10 is NO, and the determination in Step S8 is YES, it is recognized that an occupant intends to re-accelerate the vehicle. Thus, the deceleration fuel-cut (FC) control is terminated, and process retunes to a main routine to execute a normal fuel injection control (Step S9).

When the determination at Step S10 is YES, it is finally recognized that the automatic engine stop condition is fully satisfied, and the automatic engine stop control is successively executed during vehicle running. Specifically, it is determined whether the multi-speed transmission mechanism 52 is set in the high-speed range (including the 2nd speed range) or whether the 3-4 clutch 69 or 2-4 brake 70 is engaged (Step S11). If it is determined that the multi-speed transmission mechanism 52 is set in the high-speed range, the multi-speed transmission mechanism 52 is shifted down to the 1st speed range (Step S12) to eliminate an engine braking action.

Then, the target output current Ge of the alternator 28 is set at zero to stop the power generation (Step S13), so that a load to be imposed on the engine by the alternator 28 is eliminated to cope with another subsequent load to be possible imposed on the engine. Further, the throttle valve 23 is opened to set the opening K at a given value, for example, about 30% (Step S14) to ensure a sufficient scavenging performance. While the automatic engine stop control in this embodiment can sufficiently assume a scavenging performance for each of the cylinders 12A to 12D because it is designed to initiate the automatic engine stop process from the deceleration FC control, the open operation of throttle valve 23 makes it possible to ensure further enhanced scavenging performance.

Then, when the vehicle speed is lowered to a given value, for example 20 km/h, the automatic stop control means 46 detects the speed ratio a in accordance with respective detection results from the crank angle sensors 30, 31 and the turbine runner speed sensor 36, and it is determined whether the detected speed ratio a is equal to or greater than a given reference value (1 in this embodiment) (Step S15). If it is determined that the speed ratio a is equal to or greater than 1 (YES in Step S15), the process advances directly to Step S27. When the speed ratio a is less than 1 (NO in Step S15), the multi-speed transmission mechanism is shifted to the neutral state (Step S16), and then the process advances to Step S27.

Specifically, it is difficult to control the engine speed Ne having a small lowing rate. Thus, When the speed ratio a is equal to or greater than 1, which means that an external load against the engine has a small value and thereby the engine speed Ne has a small lowing rate, the multi-speed transmission mechanism 52 is maintained in the drive state to allow the automatic engine stop control to be prohibited in response to a driver's accelerator pedal operation or the need for re-acceleration, so as to provide an enhanced re-acceleration performance. When the speed ratio a is less than 1, which means that an external load against the engine has a large value and thereby the engine speed Ne has a large lowing rate, the multi-speed transmission mechanism 52 is shifted to the neutral state to allow the piston 13 to be stopped at a position falling within the adequate range R with a high probability.

When the determination in Step S3 is NO, it is determined whether the brake sensor 35 is in the ON state (Step S17). If the brake sensor 35 is not in the ON state, the process will return to Step S1. If it is determined that the brake sensor 35 is in the ON state, the process advances to Step S18 to determine whether the engine speed is equal to or greater than a given value N1, for example about 860 + 50 to 100 rpm. When it is determined that the engine speed Ne is less than the value N1, the engine speed Ne is increased up to a value slightly greater than the value N1. At a time when the engine speed Ne becomes greater than the value N1, the multi-speed transmission mechanism 52 in the drive state is shifted to the neutral state (Step S20).

Then, after Time T0 when the determination in Step S17 is made as YES and the satisfaction of the automatic engine stop condition is determined, it is determined whether a given time preset at about 1 second passes (Step S21). If the determination in Step S21 is NO, it is determined whether the acceleration pedal sensor is in the ON state or whether a driver's vehicle-start operation is performed (Step S22). If the determination in Step S22 is YES, the process will return to Step S1 without stopping the engine. This makes it possible to prohibit the automatic engine stop control in response to a driver's accelerator pedal operation or the need for re-acceleration, performed just after the vehicle speed becomes zero or during deceleration of the vehicle, to ensure adequate re-acceleration response.

Then, when the determination in Step S21 is made as YES, it is determined whether the condition of discontinuing the fuel injection (FC condition) is satisfied. Specifically, it is determined whether the engine speed Ne is equal to a target engine speed, and the boost pressure Bt is stabilized at the target pressure P1 (Step S23). At the time (Time T1 in FIG. 7) when the determination in Step S23 is made as YES, and it is detected that the engine speed Ne and the boost Bt is stabilized, the fuel injection is discontinued (Step S24). Then, the target output current Ge of the alternator 28 is set at zero to stop power generation (Step S25), and the throttle valve 23 is opened to set the opening K at a given value, for example, 30 % (Step S26). Then, the process advances to Step S27.

Before Step S27, it is determined whether a given time has passed from Time T1 of the discontinuation of the fuel injection or whether the pistons have passed through a compression TDC two times after the discontinuation of the fuel injection to completely burn fuel injected into the combustion chambers before the discontinuation of the fuel injection. When it is determined that the given time has passed, the ignition operation of the ignition device 27 is discontinued. Then, in Step S27, it is determined whether the engine speed Ne is lowered to a reference value N2 preset at about 790 rpm or whether the engine speed Ne starts lowering after Time T1 of the discontinuation of the fuel injection as shown in FIGS. 6 and 8. At Time T2 when this determination is made as YES, the throttle valve 23 is closed to set the opening K at zero % (Step S28). Thus, the boost pressure Bt increased toward atmospheric pressure by opening the throttle valve 23 in Step S14 and Step S26 is lowered by the above closing operation of the throttle valve 23 with a given time lag. Instead of the control in this embodiment where the throttle valve 23 is closed at Time T2 when it is determined in Step S28 that the engine speed Ne is lowered to the reference speed N2 or less, the throttle valve 23 may be closed at a time when the TDC engine speed ne becomes equal to or less than a reference value N2 preset, for example about 790 rpm.

Then, it is determined whether the multi-speed transmission mechanism 52 is set in the neutral state (Step S29). When it is determined that the multi-speed transmission mechanism 52 is set in the neutral state, a target output current value for the alternator 28 is set based on only the engine speed Ne in Steps S30 to S32. When it is determined that the multi-speed transmission mechanism 52 is set in the drive state, a target output current value for the alternator 28 is set based on not only the engine speed Ne but also the turbine speed Te or based on the speed ratio a.

That is, when the multi-speed transmission mechanism 52 is set in the neutral state, the output-current control means 44 executes a control for setting the target output current Ge of the alternator 28 at an initial value preset at about 60 A to operate the alternator 28 based on the initial value (Step S30).

Then, it is determined whether the TDC engine speed ne falls within a first speed range (Step S31). For example, the first speed range is set in the range of 480 to 540 rpm, based on the TDC engine speed ne at Time T3 when the piston of any one of the cylinders passes through the 4th compression TDC to the last compression TDC just before stop of the engine during the course where the engine speed Ne is being lowered along a predetermined reference line.

When the determination in Step S31 is YES or it is determined that the TDC engine speed ne falls within the first speed range (e.g. 480 to 540 rpm), the target output current Ge of the alternator 28 is set at a value corresponding to the TDC engine speed ne at Time T3 (Step S32). Specifically, the output-current control means 44 executes a control for reading out a value of the target output current Ge corresponding to the TDC engine speed ne, from a map where the target output current Ge has a larger value as the TDC engine speed ne is increased, and reducing the target output current Ge of the alternator 28 from the initial value (60A) to the value read from the map.

When the multi-speed transmission mechanism 52 is set in the drive state, the output-current control means 44 executes a control for setting the target output current Ge of the alternator 28 at a corresponding initial value G0 to the speed ratio a to operate the alternator 28 based on the corresponding initial value G0 (Step S33). Specifically, the automatic stop control means 46 detects the speed ratio a at this time. When the detected speed ratio a is less than 1, the corresponding initial value G0 is set at a given value G01 (80A in this embodiment). When the detected speed ratio a is equal to or greater than 1, the corresponding initial value G0 is set at a given value G02 (60Ain this embodiment).

Then, it is determined whether the TDC engine speed ne falls within a second speed range (Step S34). For example, the second speed range is set in the range of 480 to 510 rpm, based on the TDC engine speed ne at Time T3 when the piston of any one of the cylinders passes through the 4th compression TDC to the last compression TDC just before stop of the engine during the course where the engine speed Ne is being lowered along a predetermined reference line as show in FIG. 10.

When the determination in Step S34 is YES or it is determined that the TDC engine speed ne falls within the second speed range (e.g. 480 to 510 rpm), a value of the speed ratio a at Time T3 is detected, and the target output current Ge of the alternator 28 is set at a corresponding value G1 to the detected speed ratio a (Step S35). Specifically, the output-current control means 44 executes a control for setting the target output current Ge at a larger value G11 or G12 to be increased as the speed ratio a has a larger value, and reducing the target output current Ge of the alternator 28 from the corresponding initial value G0 to the corresponding G1, based on the value G11 or G12.

More specifically, when the speed ratio a is equal to or greater than 1 or the turbine speed Te is equal to or greater than the engine speed Ne, a load to be imposed on the engine has a small value, and thereby the engine speed Ne is lowered at a small rate. Thus, the initial value of the target output current Ge is set at the value G01 greater than that in the case where the multi-speed transmission mechanism 52 is in the neutral state, to increase the lowering rate of the engine speed Ne. When the speed ratio a is less than 1, a load to be imposed on the engine has a large value, and thereby the engine speed is lowered at a large rate. Thus, the initial value of the target output current Ge is set at the value G02 (60 A in this embodiment) less than the corresponding initial value G01, to reduce the lowering rate of the engine speed Ne. As the result of this control, the TDC engine speed ne at the time when the piston of any one of the cylinders passes through a compression TDC after the lapse of a given time gradually conforms to the adequate range r. Then, at and after a time when the TDC engine speed ne falls within the adequate range r (the time when the piston of any one of the cylinders passes through the 4th compression TDC to the last compression TDC just before stop of the engine, in this embodiment), a target output current value is adjusted according to the speed ratio a to allow the piston 13 to be stopped within the adequate range R regardless of changes in speed ratio a.

Thus, for example, even if the automatic transmission unit 50 is set in the drive state allowing a driving force to be transmitted to the wheels, variations in engine speed Ne caused by a driving force transmitted from the wheels to the engine through the rotation of the turbine runner 55 can be controlled. That is, and a load to be imposed on the engine can be adjusted while taking account of the lowering rate of the engine speed Ne, to adequately control the engine speed Ne. In addition, when the engine is automatically stopped, the target output current is set at a smaller value when the speed ratio detected by the automatic stop control means 46 is less than a given reference value (1 in this embodiment), as compared to when the speed ratio is equal to or greater than the reference value, so as to relatively reduce the load to be imposed on the engine. Thus, regardless of whether the automatic transmission unit 50 is set in the neutral state or in the drive state, the piston 13 can be stopped at a position falling within the adequate range R at a high probability.

Then, it is determined whether the TDC engine speed ne is in a third given range, for example, from 260 to 400 rpm, which is determined based on the TDC engine speed at Time T4 when the piston of any one of the cylinders passes through the second compression TDC to the last compression TDC just before stop of the engine (Step S36). At Time T4 when the determination in Step S36 is made as YES or it is determined that the piston of any one of the cylinders passes through the second compression TDC to the last compression TDC just before stop of the engine, a fuel injection quantity for the cylinder 12C to be in a compression stroke after stop of the engine is determined based on a map M0 where the fuel injection quantity is arranged such that it is increased as the TDC engine speed has a larger value, and the fuel injection is executed in the last half of the compression stroke in this cylinder 12C (Step S37). An in-cylinder temperature of the cylinder 12C will be reduced by the fuel injected thereinto to suppress increase in in-cylinder pressure therein.

Then, it is determined whether the TDC engine speed ne is equal to or less than a given value N3 (Step S38). This given value N3 corresponds to the TDC engine speed ne at a time when the piston of any one of the cylinders passes through the last compression TDC during the process where the engine speed Ne is being lowered along the predetermined reference curve. For example, the given value N3 is predetermined at about 260 rpm. Concurrently, the boost pressure Bt at each time when the pistons of the cylinders 12A to 12C sequentially pass through compression TDCs is detected, and the detected value is stored.

If the determination in Step S38 is YES or it is determined that the TDC engine speed ne is equal to or less than the given value N3 or that the piston of any one of the cylinders passes through the last compression TDC, the boost pressure Bt at Time T5 will be read out, and the read value will be set as the boost pressure Bt at the second compression TDC to the last compression TDC just before stop of the engine (Step S39).

Then, based on the TDC engine speed ne at Time T5 when the engine has the last compression TDC (this TDC engine speed ne will hereinafter be referred to as "last TDC engine speed ne1"), and the boost pressure Bt at the second compression TDC to the last compression TDC just before stop of the engine (this boost pressure will hereinafter be referred to as "boost pressure Bt2"), it is determined whether each of the pistons 13 is likely to be stopped at a position on the side of the last phase of each stroke (as to the expansion-stroke cylinder, a position on the side of the BDC) (Step S41). Specifically, when the last TDC engine speed ne1 is equal to or greater than a given rotational speed N4 (of, for example, 200 rpm), the boost pressure Bt2 is equal to or less than a given pressure P2 (of, for example, - 200 mmHg) (is a vacuum pressure), each of the pistons is highly likely to be stopped on the side of the last phase of each stroke, or the piston stop position in the expansion-stroke cylinder 12A is highly likely to be located close to 120°CA in the adequate range R of 100 to 120°CA after the compression TDC, and the determination in Step S41 is made as YES.

The determination of NO in Step S40 means that each of the pistons is less likely to be stopped on the side of the last phase of each stroke, and highly likely to be stopped relatively on the side of the initial phase of each stroke. That is, the piston stop position in the expansion-stroke cylinder 12A is likely to be located close to 100°CA or at 100°CA or less, in the adequate range R of 100 to 120°CA after the compression TDC. Thus, the throttle valve 23 is opened to allow the pistons 13 to be more reliably stopped at a position falling within the adequate range R. For example, the throttle valve 23 is controlled in such a manner that the opening K of the throttle valve 23 is set at a predetermined first opening K1 of about 40 % of the full throttle opening (Step S41), to increase the intake flow rate so as to reduce an intake resistance in the cylinder in an intake stroke (intake-stroke cylinder) 12D. This helps the pistons be stopped at a position on the side of the last phase of each stroke, and thereby can prevent the piston stop position in the expansion-stroke cylinder 12A from moving beyond the lower limit (100°CA) of the adequate range R.

The determination of YES in Step S40 means that a rotational inertia force of the engine is relatively large, and the compression-stroke cylinder 12C has a low intake flow rate in the last intake stroke thereof or a small compressive reaction force. That is, the conditions of allowing each of the pistons to be readily stopped at a position on the side of the last phase of each stroke are satisfied. Thus, the throttle valve 23 is opened, for example, in such a manner that the opening K of the throttle valve 23 is set at a predetermined second opening K2 of about 5 % of the full throttle opening (Step S42). The second opening K2 may be set to a smaller value or a fully closed state according to engine characteristics. In this manner, an appropriate intake resistance is generated in the intake-stroke cylinder 12D to effectively prevent each piston stop position of the pistons 13 from moving beyond the adequate range R or into the last phase of each stroke.

Then, it is determined whether the engine is stopped (Step S43). When the determination in Step S43 is made as YES, it is determined whether the multi-speed transmission mechanism 52 is in the neutral state (Step S44). If the multi-speed transmission mechanism 52 is in the neutral state, the multi-speed transmission mechanism 52 is resumed to the drive state (Step S45). Then, the automatic stop enable flag F is set to OFF (Step S46), and the control process id completed.

In the automatic engine stop control according to the automatic stop control means 46, during vehicle running under the condition that the multi-speed transmission mechanism 52 is in the high-speed range, the state of the automatic stop enable flag F is checked as the above automatic stop condition (Step S1), and it is determined whether the brake sensor 35 is in the ON state (Step S10, S17, etc.). When it is determined that the automatic stop condition is satisfied, based on these determinations, the fuel injection to the cylinders 12A to 12D during vehicle running is discontinued (Step S23), or the resuming of the fuel supply from the deceleration FC control is precluded (Steps S7 to S10). Thus, the engine can be completely stopped before stop of the vehicle with a high probability.

In the automatic stop control means 46, instead of detecting the state of vehicle running by a vehicle-speed detection means or the like to determine the automatic engine stop condition and/or discontinue the fuel supply, the engine speed Ne is detected by the crank angle sensors 30, 31, and it is determined that the vehicle is in a running state, when the detected engine speed is greater than a normal idling speed (e.g. 650 rpm in the drive state). That is, the state of vehicle running is detected indirectly from the detection of the engine speed Ne. It is understood that vehicle-speed detection means may be provided, and the automatic stop control means 46 is designed to receive an output signal from the vehicle-speed detection means, and instruct the control means 41 to 45 etc, based on the output signal. Alternatively, the automatic stop control means 46 is designed to detect the state of vehicle running indirectly based on whether the multi-speed transmission mechanism 52 is in the high-speed range, and instruct the control means 41 to 45 etc, when the multi-speed transmission mechanism 52 is in the high-speed range.

Further, in the system according to the above embodiment, based on the knowledge that, when the multi-speed transmission mechanism 52 is set in the neutral state, or the engine has almost no external load, the piston 13 is completely stopped within a given time period (2 seconds in the above embodiment) from discontinuation of the fuel supply except for the discontinuation of the fuel supply during deceleration, the timing for discontinuation of the fuel supply is set to allow a time period required for stopping the vehicle according to a usual brake operation, to be greater than a time period required for stopping the piston 13. Specifically, during execution of the deceleration FC control, at a time when the engine speed reaches the resuming speed FC·OFF set at a value greater than a normal idling speed, the fuel supply is discontinued, or the resuming of the fuel supply is precluded, to stop the piston during vehicle running. Thus, the vibrations due to the automatic engine stop control can be absorbed by vibrations due to vehicle running, so as to minimize the increase in vibrations against an occupant. This can prevent uncomfortable occupant's feeling to maintain adequate comfort.

In addition, the discontinuation of the fuel supply required for the automatic engine stop control can be achieved by utilizing the deceleration FC control for discontinuing the fuel supply during deceleration of the vehicle, and precluding the resuming of the fuel supply. Thus, a scavenging performance in the cylinders 12A to 12D can be reliably assured.

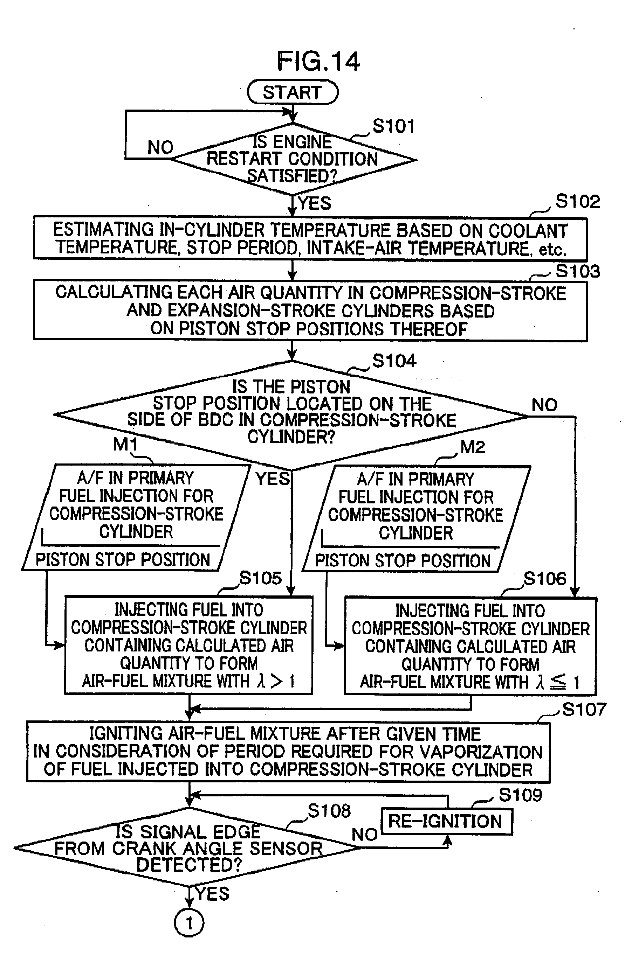

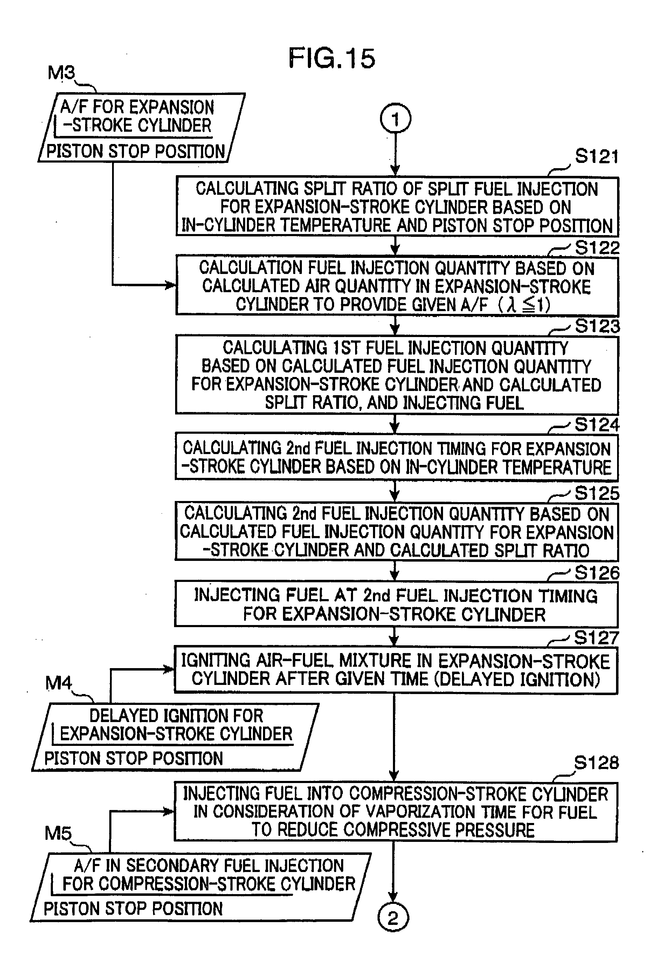

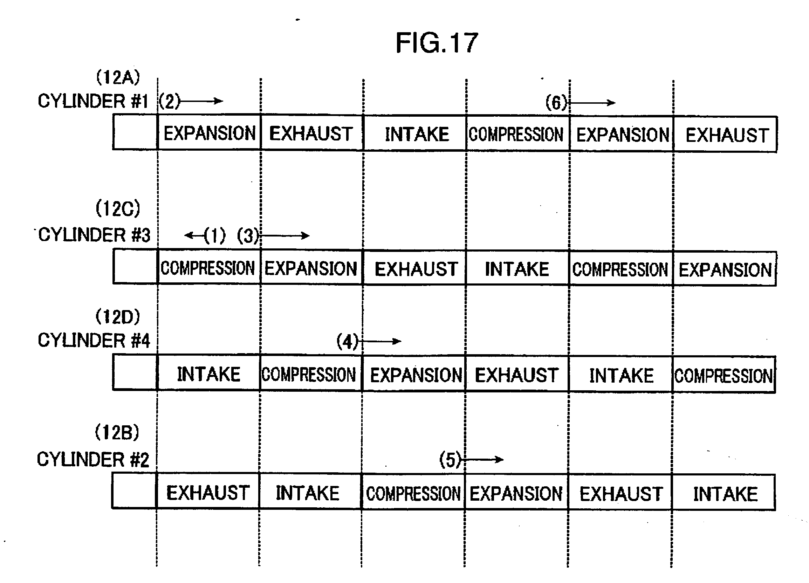

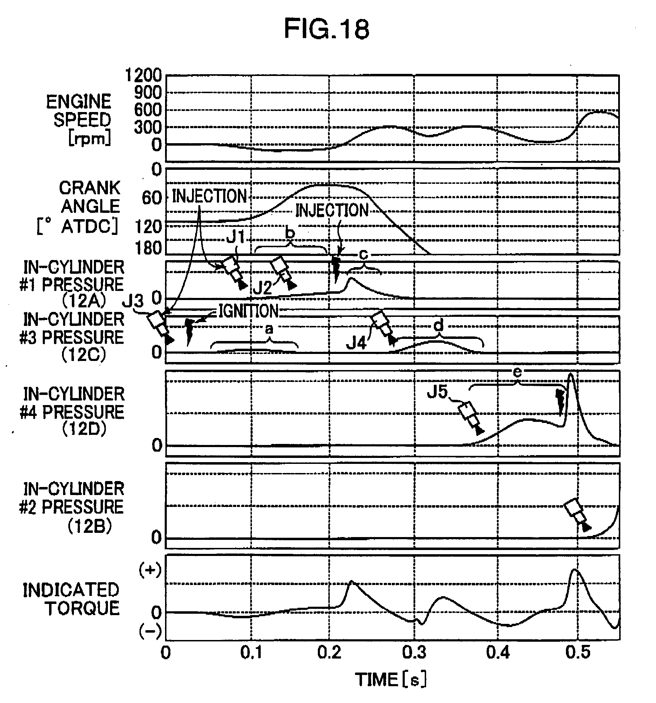

With reference to flowcharts illustrated in FIGS. 14 to 16, and time charts illustrated in FIGS. 17 and 18, an engine restart control process for restarting the engine automatically stopped in the above way will be described below.

Firstly, it is determined whether a given engine restart condition is satisfied (Step S101). When the determination in Step S101 is made as YES in response to detection, for example, of the operation of an accelerator pedal for starting moving a stopped vehicle, the lowering of a battery voltage or the activation of an air conditioner, an in-cylinder temperature is estimated based on an engine coolant temperature, a lapsed time from completion of the automatic engine stop control, an intake temperature, etc. (Step S102).

Then, based on respective stop positions of the pistons 13 detected in the process of the automatic engine stop control, an air quantity in each of the compression-stroke cylinder 12C and the expansion-stroke cylinder 12A is calculated (Step S103). Specifically, a combustion chamber volume in each of the compression-stroke and expansion-stroke cylinders 12C, 12A can be calculated from the stop position of the corresponding piston 13, and a flesh air quantity can be derived from the calculated combustion chamber volume, because the engine has several combustion cycles in the period from the discontinuation of the fuel injection to the engine stop to allow the cylinders including the expansion-stroke cylinder 12A to be filled with a flesh air, and an in-cylinder pressure in each of the compression-stroke and expansion-stroke cylinders 12C, 12A becomes approximately equal to atmosphere pressure after the engine stop.

Then, it is determined whether the piston stop position detected based on output signals of the crank angle sensors 30, 31 is located on the side of the bottom dead center (BDC) within the adequate stop range (of 60 to 80°CA before TDC or BTDC 60 to 80°CA) in the compression-stroke cylinder 12C (Step S104). If the determination in Step S104 is YES, and it is determined that the compression-stroke cylinder 12C contains a relatively large air quantity, a primary fuel injection will be performed for the compression-stroke cylinder 12C containing the air quantity calculated in Step 103, to form therein an air-fuel mixture with an air-fuel ratio having an excess air ratio λ > 1 (e.g. air-fuel ratio: about 20) (Step S105). This air-fuel ratio is determined using a first air-fuel ratio map M1 for the primary fuel injection, and set at a lean air-fuel ratio or λ > 1. This prevents combustion energy from being excessively produced even if the compression-stroke cylinder 12C contains a relatively large air quantity.

If the determination in Step S104 is NO, and the compression-stroke cylinder contains a relatively low air quantity, the primary fuel injection will be performed for the compression-stroke cylinder containing the air quantity calculated in Step 103, to form therein an air-fuel mixture with an air-fuel ratio having λ = 1 (Step S106). This air-fuel ratio is determined using a second air-fuel ratio map M2 for the primary fuel injection, and set at λ = 1 (theoretical air-fuel ratio or air-fuel ratio richer than that). This makes it possible to obtain sufficient combustion energy for reverse rotation of the crankshaft even if the compression-stroke cylinder 12C contains a relatively low air quantity.

Then, after the lapse of a given time predetermined in consideration of a period of time required for vaporization of the fuel injected into the compression-stroke cylinder 2C through the primary fuel injection, the obtained air-fuel mixture in the cylinder 12C is ignited (Step S107). Subsequently, it is determined whether the pistons 13 are moved, based on whether at least one edge, i.e. rising or falling edge, of detection signals from the crank angle sensors 30, 31 within a given time after the ignition (Step S108). If the determination in Step S108 is NO or it is determined that the pistons 13 are not moved, an additional ignition will be performed for the compression-stroke cylinder 12C (Step S109).

When the determination in Step S108 is made as YES or it is determined that the pistons 13 are moved, a split ratio (or the ratio between a first initial injection and a second last injection) in a split fuel injection for the expansion-stroke cylinder 12A is calculated based on and the in-cylinder temperature estimated in Step S102 and the piston stop position (Step S121). The percentage of the last injection is set at a larger value as the piston stop position in the expansion-stroke cylinder 12A is located closer to BDC, and the in-cylinder temperature is higher.

Then, based on the air quantity in the expansion-stroke cylinder 12A calculated in Step S103, a total fuel injection quantity is calculated to form an air-fuel mixture with a given air-fuel ratio (λ = 1) (Step S122). This total air-fuel ratio is determined using an air-fuel ratio map M3 for the expansion-stroke cylinder 12A, predetermined with respect to each stop position of the piston 13. Further, an initial (first) fuel injection quantity for the expansion-stroke cylinder 12A is calculated based on the total fuel injection quantity calculated in Step S122 and the split ratio calculated in Step S121, and the calculated quantity of fuel is injected (Step S123).

Then, a last (second) fuel injection timing for the expansion-stroke cylinder 12A is calculated based on the in-cylinder temperature estimated in Step S102 (Step S124). This second injection timing is set to be in a period where the in-cylindcr air is being compressed after the piston 13 starts moving toward the TDC (reverse rotation of the engine crankshaft), so as allow latent heat of vaporization of the injected fuel to effectively reduce a compression pressure, or allow the piston 13 to be moved toward the TDC. The second injection timing is also set to maximize a period of time for allowing the fuel in the second injection to be vaporized before an ignition timing therefor.

Then, a last (second) fuel injection quantity for the expansion-stroke cylinder 12A is calculated based on the total fuel injection quantity for the expansion-stroke cylinder 12A calculated in Step S122 and the split ratio calculated in Step S121 (Step S125), and this second fuel injection is executed at the second injection timing calculated in Step S124 (Step 126).

After the second fuel injection to the expansion-stroke cylinder 12A, the obtained air-fuel mixture is ignited with a given delay time (Step S127). This delay time is determined using an ignition map M4 for the expansion-stroke cylinder 12A, predetermined with respect to each stop position of the piston 13. According to first combustion induced in the expansion-stroke cylinder by the above ignition, the rotational direction of the engine crankshaft is changed from reverse to normal. Thus, the piston 13 of the compression-stroke cylinder 12C is moved toward the TDC to start compressing in-cylinder gas (burnt gas through the combustion induced by the ignition in Step S107).

Then, in consideration of a period of time required for vaporization of fuel, a secondary fuel injection is performed for the compression-stroke cylinder 12C (Step S128). The quantity of fuel in the secondary fuel injection is determined to allow a total air-fuel ratio based the sum of respective fuel injection quantities in the primary and secondary fuel injections to be richer (e.g. about 6) than a combustible air-fuel ratio (lower limit: 7 to 8), by use of an air-fuel ratio map M5 for the secondary fuel injection, predetermined with respect to each stop position of the piston 13. According to latent heat of vaporization of the fuel injected by the secondary fuel injection for the compression-stroke cylinder 12C, a compression pressure around the compression TDC in the compression-stroke cylinder 12C can be reduced to allow the piston 13 to readily pass through this compression TDC.

The secondary fuel injection to the compression-stroke cylinder 12C is intended only to reduce the in-cylinder compression pressure. That is, no ignition for inducing combustion is executed, and the obtained air-fuel mixture richer than a combustible air-fuel ratio causes no self-ignition. The resulting unburnt fuel will be purified through the reaction with oxygen stored in the exhaust gas purification catalyst in the exhaust passage 22.

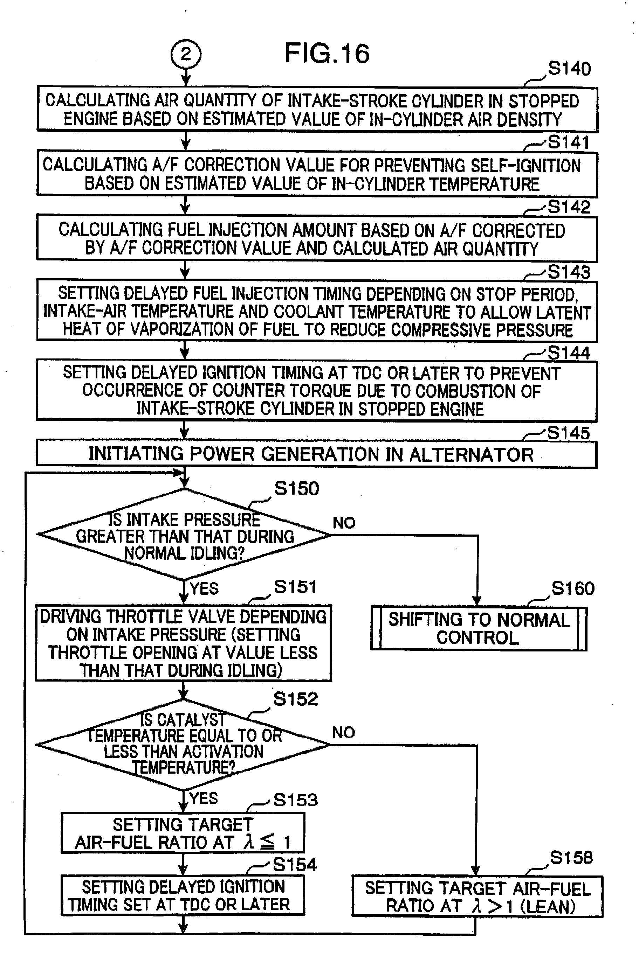

As above, the fuel injected by the secondary fuel injection for the compression-stroke cylinder 12C is not burnt. Thus, as shown in FIG. 16, combustion subsequent to the first combustion in the expansion-stroke cylinder 12A will firstly occur in the intake-stroke cylinder 12D or the cylinder #4 in the state after being stopped in an intake stroke. Energy of the first combustion in the expansion-stroke cylinder 12A is partly used as energy required for the piston 13 of the intake-stroke cylinder 12D to pass through a compression TDC. That is, the energy of the first combustion in the expansion-stroke cylinder 12A is used as both energy required for the piston 13 of the compression-stroke cylinder 12C to pass through the compression TDC and energy required for the piston 13 of the intake-stroke cylinder 12D to pass through a compression TDC.

Thus, in view of smooth starting, it is desirable to minimize the energy required for the piston 13 of the intake-stroke cylinder 12D to pass through a compression TDC. For this purpose, an air density in the intake-stroke cylinder 12D is estimated to calculate an air quantity therein in accordance with the estimated value (Step S140). Then, based on the in-cylinder temperature estimated in Step S102, an air-fuel ratio correction value for preventing self-ignition is calculated (Step S141). Specifically, the occurrence of self-ignition leads to combustion generating an undesirable force (counter torque) of pushing back the piston 13 toward a BDC before reaching a compression TDC to cause additional consumption of the energy for passing through the compression TDC. Thus, the air-fuel ratio is corrected to a leaner value to prevent the occurrence of self-ignition.

Then, based on the air quantity in the intake-stroke cylinder 12D calculated in Step S140, and an air-fuel ratio corrected by the air-fuel ratio correction value calculated in Step S141, a fuel injection quantity for the intake-stroke cylinder 12D is calculated (Step S142). Then, the calculated quantity of fuel is injected into the intake-stroke cylinder 12D. This fuel injection is executed at a delayed timing set in the last phase of a compression stroke to allow latent heat of vaporization of the fuel to effectively reduce a compression pressure or the energy require for passing through the compression TDC (Step S143), and the delay time is calculated based on the lapsed time after completion of the automatic engine stop control (automatic stop period of the engine), the intake temperature, the engine coolant temperature, etc.

Further, the obtained air-fuel mixture is ignited at a delayed timing set at the TDC or later to prevent the occurrence of counter torque (Step S144). According to the above control, when the piston is moved up to the compression TDC in the intake-stroke cylinder 12D, a compression pressure is reduced to allow the piston to readily pass through the TDC. Further, after the piston passes through the TDC, combustion energy is produced to generate a torque in the normal rotational direction of the crankshaft.

While the engine restart control may be shifted to a normal engine control after Step S144, an additional control for suppressing engine speed surging is performed in this embodiment. The term "engine speed surging" herein means a phenomenon that an engine speed is increased excessively and rapidly after the first combustion in the intake-stroke cylinder 12D, and undesirably causes acceleration shock and driver's uncomfortable feel. The intake pressure (pressure on the downstream side of the throttle valve) is approximately equal to atmosphere pressure during the automatic stop period, and thereby combustion energy in each of the cylinders 12A to 12D just after engine start (after the first combustion in the intake-stroke cylinder 12D) temporarily becomes greater than that in normal idling to cause the engine speed surging. In this embodiment, the following Steps S145 to S159 are performed to suppress the engine speed surging.

Firstly, the target output current of the alternator 28 is set at a value slightly greater than a normal value, and activated to generate power (Step S145). This power generation of the alternator provides an increased rotational resistance in the crankshaft 3 (external load of the engine) to suppress engine speed surging. Then, it is determined whether the intake pressure detected by the intake pressure sensor 26 is greater than that during a normal idling without the automatic engine stop control (Step S150). If the determination in Step S150 is YES, or the current condition is liable to cause engine speed surging, the opening of the throttle valve 23 will be reduced to be less than that during the normal idling (Step S151) to suppress the quantity of combustion energy to be produced.

Then, it is determined whether the exhaust gas purification catalyst in the exhaust passage 22 has a temperature equal to or less than an activation temperature thereof (Step S152). When the determination in Step S152 is YES, the target air-fuel ratio for the cylinders is set at a rich value or λ = 1 (Step S153), and the ignition timing is delayed to be a TDC or later (Step S154). This makes it possible to facilitate temperature rise or warming-up in the catalyst. In addition, the quantity of combustion energy to be produced can be further suppresses by the delayed ignition timing.

If the determination in Step S152 is made as NO or it is determined that the exhaust gas purification catalyst has a temperature greater than the activation temperature, the target air-fuel ratio for the cylinders is set at a lean value or λ > 1 and in a stratified lean combustion mode (Step S158). This lean combustion makes it possible to achieve reduced fuel consumption and suppress the quantity of combustion energy to be produced.

The process returns to Step S150 through Step S154 or S158, and the above control process will be repeated until the determination in Step 150 is made as NO or it is determined that the intake pressure is greater than that during a normal idling without the automatic engine stop control. The determination of NO in Step 150 means that the risk of occurrence of engine speed surging is eliminated. Thus, the engine restart control includiding the output current value of the alternator 28 is shifted to a normal engine control (Step S160).

According to the above restart control, as shown in FIGS. 17 and 18, the primary fuel injection J3 is firstly performed in the compression-stroke cylinder 12C (cylinder #3), and the resulting air-fuel mixture is ignited to induce combustion [(1) in FIG. 17]. The piston 13 of the compression-stroke cylinder 12C is pushed down toward the BDC by a combustion pressure [range "a" in FIG. 18] arising from this combustion (1) pushes, and thereby the engine crankshaft is driven in the reverse rotation direction. This primary fuel injection J3 to the compression-stroke cylinder 12C is performed to selectively form an air-fuel mixture with a lean air-fuel ratio (λ > 1) if the air quantity is relatively large, or with a theoretical or richer air-fuel ratio (λ = 1) if the air quantity is relatively small. This makes it possible to obtain adequate combustion energy for reverse rotation of the engine crankshaft, or combustion energy to the extent capable of sufficiently compressing air in the expansion-stroke cylinder 12A without an excessive reverse rotation or moving the piston of the expansion-stroke cylinder 12A beyond the compression TDC.

In conj unction with initiation of the reverse rotation in the engine crankshaft, the piston 13 of the expansion-stroke cylinder 12A (cylinder #1) starts being moved toward the TDC. Just after the movement, the first (initial) fuel injection J1 is performed in the expansion-stroke cylinder 12A, and the injected fuel starts being vaporized. Then, when the piston 13 of the expansion-stroke cylinder 12A is moved to a position on the side of the TDC (preferably on the side of the TDC relative to the stroke midpoint), and air in the cylinder 12A is compressed, the second (last) fuel injection J2 is performed. Latent heat of vaporization of this injected fuel provides a reduced compression pressure to allow the piston 13 to be moved closer to the TDC, so that the density of the compressed air (air-fuel mixture) is increased [range "b" in FIG 16].

When the piston 13 of the expansion-stroke cylinder 12A is moved sufficiently close to the TDC, the air-fuel mixture in the cylinder 12A is ignited to induce combustion of the sufficiently vaporized fuel from the first fuel injection (J1) and the second fuel injection (J2) [(2) in FIG 17], and the engine crankshaft is driven in the normal rotation direction by the resulting combustion pressure [region "c" in FIG. 18].

Further, the secondary fuel injection (J4) is performed in the compression-stroke cylinder 12C at an appropriate injection timing to form an air-fuel mixture with a richer air-fuel ratio than a combustible air-fuel ratio [(3) in FIG. 17]. While this injected fuel is not burnt in the compression-stroke cylinder 12C, a compression pressure in the compression-stroke cylinder 12C is reduced by latent heat of vaporization of the injected fuel [region "d" in FIG. 18]. This makes it possible to reduce a part of the first combustion energy in the expansion-stroke cylinder 12A to be consumed as the energy required for the piston of the compression-stroke cylinder to pass through the compression TDC (first compression TDC after initiation of the restart control).

Furthermore, the fuel injection timing in the fuel injection (J5) for the intake-stroke cylinder 12D or the cylinder having combustion subsequent to the first combustion is set at an adequate timing [e.g. after the intermediate phase of the compression stroke in the cylinder 12D, as indicated by (4) in FIG. 17] for allowing latent heat of vaporization of the injected fuel to reduce the in-cylinder temperature and compression pressure. This prevents the occurrence of self-ignition before the compression TDC during the compression stroke of the intake-stroke cylinder 12D. In addition, the ignition timing in the intake-stroke cylinder 12D is set at the combustion TDC or later [region "e" in FIG. 18] to prevent combustion before the combustion TDC. That is, the reduced compression pressure by the fuel injection (J5) and no combustion before the compression TDC makes it possible to reduce a part of the first combustion energy in the expansion-stroke cylinder 12A to be consumed as the energy required for the piston of the intake-stroke cylinder to pass through the compression TDC (second compression TDC after initiation of the restart control).

In this manner, energy of the first combustion [(2) in FIG. 17] in the expansion-stroke cylinder 12A allows the respective pistons of the compression-stroke and intake-stroke cylinders to pass through or be moved beyond the first compression TDC [(3) in FIG. 17] and the second compression TDC [(4) in FIG. 17] so as to assure a smooth and reliable restart performance. In the subsequent combustion cycle [(5), (6), ---- in FIG 17], the restart control will be shifted to a normal engine control while preventing the occurrence of surging, for example, by setting the air-fuel ratio at a lean air-fuel ratio (λ > 1) and/or delaying the ignition timing, depending on the catalyst temperature.

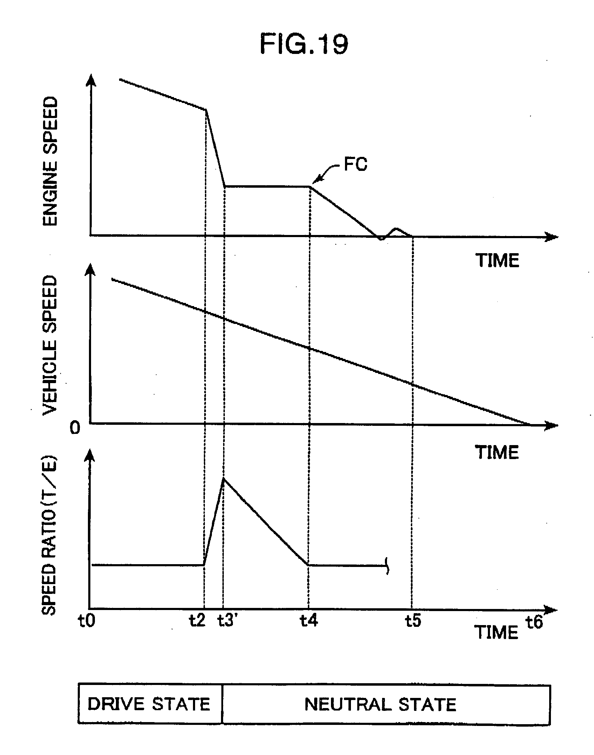

The above engine starting system is only one embodiment of the present invention, and the disclosed specific structures and controls of the above engine starting system may be appropriately changed and modified without departing from the spirit and scope of the present invention. Some modifications will be described below.
(1) In the above embodiment, when the multi-speed transmission mechanism 52 is in the medium or high-speed range including the 2nd-speed range causing an engine braking action, the multi-speed transmission mechanism 52 is shifted down to the 1st-speed range having no engine braking action, to completely stop the piston 13 during vehicle speed. However, the system may be designed to stop the vehicle while maintaining the medium or high-speed range. In this case, while the piston 13 is not completely stopped before stop of the vehicle, the piston 12 is stopped in conjunction with or immediately after stop of the vehicle. Thus, vibrations due to the automatic engine stop control can be absorbed by vibrations due to vehicle running, so as to minimize the increase in vibrations against an occupant.
(2) In the above embodiment, a deceleration FC control is executed to discontinue the fuel supply during deceleration of the vehicle so as to prevent the formation of an overrich air-fuel mixture. Then, the determination on satisfaction of the automatic engine stop condition is performed at a given engine speed preset for allowing the fuel supply to be resumed from the deceleration FC state thereat. When the automatic engine stop condition is satisfied, the resuming of the fuel supply is precluded to continue the deceleration FC control so as to automatically stop the engine. However, as shown in FIG. 19, when the deceleration FC control is not executed, the multi-speed transmission mechanism 52 may be shifted to the neutral state to stabilize the engine speed, and then the fuel supply may be discontinued.
   More specifically, the system may be designed as follows. As shown in FIG 19, the lockup clutch 64 is disengaged or shifted to the un-lockup state, at Time t2 when the engine speed Ne reaches the lockup release speed NIu. In conjunction with the disengagement, the engine speed Ne is quickly lowered. Then, at Time t3' when the engine speed Ne is lowered to a preset value (e.g. 860 rpm) greater than a normal idling speed (e.g. 650 rpm in the D range), the multi-speed transmission mechanism 52 is set in the neutral state to stabilize the engine speed Ne at the preset value. Then, after the lapse of a given time from Time t3', the fuel-supply control means 43 is instructed to discontinue the fuel supply, and then the basic control in the neutral state will be executed.
   In the time chart about the speed ratio a in FIG. 19, the speed ratio a after Time t3' is omitted, because the multi-speed transmission mechanism 52 is shifted from the drive state to the neutral state at Time t3', and thereby the turbine runner is stopped after several rotations caused by an inertia force
(3) While the intake flow rate to each of the cylinders 12A to 12D in the above embodiment is adjusted using the intake flow rate adjusting means consisting of the throttle valve 23 disposed on the upstream side of the surge tank 21b, the intake flow rate adjusting means is not limited to such a throttle valve, but any other suitable device capable of adjusting the intake flow rate to each of the cylinders 12A to 12D, for example, a conventional variable valve operating mechanism capable of selectively changing the valve lift quantity of at least one of the intake valves 10 in each of the cylinders 12A to 12D, or a multi-type throttle valve having a plurality of valve bodies each disposed in a corresponding one of the intake manifold passages 21a in fluid communication with the corresponding cylinders 12A to 12d, may be used.
(4) Further, in the engine starting system according to the above embodiment, during the engine restart control for restarting the automatically stopped engine, the primary combustion is induced in the compression-stroke cylinder 12C to slightly move the crankshaft 3 in the reverse rotation direction so as to compress an air-fuel mixture in the expansion-stroke cylinder 12A. Then, the compressed air-fuel mixture is ignited. However, the engine starting system of the present invention is not limited to such a process, but an air-fuel mixture in the expansion-stroke cylinder 12A may be initially ignited to restart the engine.
(5) While the fuel injection for the first combustion in the expansion-stroke cylinder 12A during the engine restart control in the above embodiment is performed by the split fuel injection (J1 + J2), this fuel injection may be performed by a single fuel injection designed to inject fuel at a given single fuel injection timing which is determined by experimental tests or the like to substantially achieve both the reduction in compression pressure based on latent heat of vaporization and the seeurement of a vaporization performance. Further, the split fuel injection for the first combustion in the expansion-stroke cylinder 12A may be split in three or more according to need.
(6) The engine start control may be designed, but omitted in the above embodiment, to execute a starter-assisted restart operation when a given restart condition is satisfied, for example, in cases where the piston stop position is not in the adequate range R, or the engine speed is not increased up to a given value after the initiation of the engine start control.

### INDUSTRIAL APPLICABILITY

As is clear from the above description, the present invention provides an engine starting system for automatically stopping and restarting an engine of a vehicle equipped with an automatic transmission mechanism having a torque converter, wherein the vehicle includes turbine-speed detection means for detecting a turbine speed (Te) of the automatic transmission mechanism directly or indirectly based on information from the automatic transmission mechanism, and the engine includes: combustion control means for controlling a fuel injection quantity and a fuel injection timing of a fuel injection valve operable to inject fuel into each of a plurality of cylinders of the engine, and controlling an ignition timing of a plurality of spark plugs provided in the corresponding cylinders, to execute combustion control corresponding to each engine operation state; fuel-supply control means for controlling the execution and discontinuation of the fuel injection by the fuel injection valve to control a fuel supply to each of the cylinders; and engine-speed detection means for detecting an engine speed (Ne). The engine starting system comprises: automatic stop control means operable, when a predetermined automatic engine stop condition is satisfied, to instruct the fuel-supply control means to discontinue the fuel injection from the fuel injection valve, so as to automatically stop the engine; automatic start control means operable, when an engine restart condition for the automatically stopped engine is satisfied, to instruct the fuel-supply control means and the combustion control means to inject fuel from the fuel injection valve into at least one of the cylinders which is in the state after being stopped in an expansion stroke, and ignite the injected fuel by the spark plug of the cylinder and induce combustion so as to automatically restart the engine; and load adjustment means for adjusting a load to be imposed on the engine after the satisfaction of the automatic engine stop condition, at a given level. The automatic stop control means includes speed-ratio calculation means for calculating a speed ratio (Te/Ne) of the turbine speed (Te) of the torque converter to the engine speed (Ne) in accordance with each output from the engine-speed detection means and the turbine-speed detection means. The automatic stop control means is operable to, during the automatic engine stop control after the satisfaction of the automatic engine stop condition, instruct the load adjustment means to adjust the load to be imposed on the engine, in accordance with the speed ratio (Te/Ne) calculated by the speed-ratio calculation means, in such a manner that the load is reduced when the speed ratio (Te/Ne) is less than a given reference value, relative to when the speed ratio (Te/Ne) is equal to or greater than the reference value. Thus, even if the automatic transmission mechanism is set in a state liable to cause instability in engine speed, for example, a drive state, the engine speed can be adjusted to have a lowering rate allowing a piston to be stopped at a suitable position for restart of the engine so as to provide an enhanced engine restart performance.

## Claims

1. An engine starting system for automatically stopping and restarting an engine of a vehicle equipped with an automatic transmission mechanism having a torque converter, wherein:
said vehicle includes turbine-speed detection means for detecting a turbine speed (Te) of the automatic transmission mechanism directly or indirectly based on information from the automatic transmission mechanism; and
said engine includes:
combustion control means for controlling a fuel injection quantity and a fuel injection timing of a fuel injection valve operable to inject fuel into each of a plurality of cylinders of the engine, and controlling an ignition timing of a plurality of spark plugs provided in the corresponding cylinders, to execute a combustion control corresponding to each engine operation state;
fuel-supply control means for controlling the execution and discontinuation of the fuel injection by the fuel injection valve to control a fuel supply to each of the cylinders; and
engine-speed detection means for detecting an engine speed (Ne),
said engine starting system comprising:
automatic stop control means operable, when a predetermined automatic engine stop condition is satisfied, to instruct said fuel-supply control means to discontinue the fuel injection from said fuel injection valve, so as to automatically stop the engine;
automatic start control means operable, when an engine restart condition for said automatically stopped engine is satisfied, to instruct said fuel-supply control means and said combustion control means to inject fuel from said fuel injection valve into at least one of the cylinders which is in the state after being stopped in an expansion stroke, and ignite the injected fuel by the spark plug of said cylinder and induce combustion so as to automatically restart the engine; and
load adjustment means for adjusting a load to be imposed on the engine after the satisfaction of said automatic engine stop condition, at a given level.
wherein said automatic stop control means includes speed-ratio calculation means for calculating a speed ratio (Te/Ne) of the turbine speed (Te) of said torque converter to the engine speed (Ne) in accordance with each output from said engine-speed detection means and said turbine-speed detection means, wherein said automatic stop control means is operable to, during the automatic engine stop control after the satisfaction of said automatic engine stop condition, instruct said load adjustment means to adjust the load to be imposed on the engine, in accordance with the speed ratio (Te/Ne) calculated by said speed-ratio calculation means, in such a manner that said load is reduced when said speed ratio (Te/Ne) is less than a given reference value, relative to when said speed ratio (Te/Ne) is equal to or greater than said reference value.

2. The engine starting system as defined in claim 1, wherein said automatic transmission mechanism is designed to be switchable between a neutral state in which the transmission of a driving force from the engine to wheels of the vehicle is cut off, and a drive state in which the driving force from the engine is allowed to be transmitted to the wheels, so as to serve as said load adjustment means, wherein:
said automatic stop control means is operable to instruct said load adjustment means to adjust said automatic transmission mechanism in such a manner as to have the drive state when the speed ratio (Te/Ne) calculated by said speed-ratio calculation means is equal to or greater than said reference value, and to have said neutral state when said speed ratio (Te/Ne) is less than said reference value.

3. The engine starting system as defined in claim 1 or 2, wherein said reference value is 1 or a value close to 1.

4. The engine starting system as defined in claim 1 or 2, wherein said load adjustment means includes an alternator adapted to be driven by the engine, wherein:
said automatic stop control means is operable to instruct said load adjustment means to set a target output current of said alternator at a smaller value when the speed ratio (Te/Ne) calculated by said speed-ratio calculation means is less than said reference value, as compared to when said speed ratio (Te/Ne) is greater than said reference value.

5. The engine starting system as defined in claim 4, wherein said automatic stop control means is operable to instruct said load adjustment means to set a target output current of said alternator at a given value in response to discontinuation of the fuel supply from said fuel injection valve, and then adjust said given value depending on the speed ratio (Te/Ne) calculated by said speed-ratio calculation means.

6. The engine starting system as defined in claim 1, wherein said automatic stop control means is operable to set the engine speed (Ne) at which said fuel-supply control means is instructed to discontinue the fuel injection from said fuel injection valve during the automatic engine stop control, at a value greater than a normal idling speed, and to set the engine speed (Ne) at a time before said discontinuation of the fuel injection from said fuel injection valve by use of said fuel-supply control means, at a larger value when the speed ratio (Te/Ne) calculated by said speed-ratio calculation means before said discontinuation of the fuel injection from said fuel injection valve by use of said fuel-supply control means is less than a given threshold value, relative to when said the speed ratio (Te/Ne) is equal to or greater than said threshold value.

7. The engine starting system as defined in claim 1, wherein said automatic engine stop condition is set to be satisfied even when the vehicle is in a running state, wherein:
said automatic stop control means is operable to determine whether said automatic engine stop condition is satisfied, and, when determining that said automatic engine stop condition is satisfied in the vehicle running state, to instruct said fuel-supply control means to discontinue the fuel injection from said fuel injection valve, during the vehicle running state.

8. The engine starting system as defined in claim 7, wherein said automatic transmission mechanism includes a multi-speed transmission mechanism adapted to be switchable between a plurality of speed ranges having a low-speed range and a high-speed range, in a drive state allowing a driving force from the engine to be transmitted to wheels of the vehicle, wherein:
said automatic stop control means is operable to instruct said fuel-supply control means to discontinue the fuel injection from said fuel injection valve in said vehicle running state, on the condition that said automatic transmission mechanism is in the high-speed drive state.

9. The engine starting system as defined in claim 7, wherein said torque converter of said automatic transmission mechanism is adapted to be switchable between a lockup state and an un-lockup state, in such a manner as to be shifted to the lockup state during deceleration of the vehicle, and shifted from said lockup state to the un-lockup state at a given engine speed,
wherein:
said automatic stop control means is operable to determine whether said automatic engine stop condition is satisfied, at a time when or after the engine speed (Ne) reaches an lockup release speed at which said torque converter is shifted from the lockup state to the an-lockup state.

10. The engine starting system as defined in either one of claim 7 to 9, wherein said fuel-supply control means is operable to execute a deceleration fuel cut control for discontinuing the fuel injection from said fuel injection valve to each of the cylinders in a given engine speed range during deceleration of the vehicle, wherein:
said automatic stop control means is operable, when said deceleration fuel-cut control is executed, and the automatic engine stop condition is determined to be satisfied, to preclude said fuel-supply control means from resuming the fuel injection from said fuel injection valve, so as to discontinue the fuel injection from the fuel injection valve to each of the cylinders to achieve the automatic engine strop control.

11. The engine starting system as defined in claim 10, wherein said automatic transmission mechanism is designed to be switchable between a neutral state in which the transmission of a driving force from the engine to wheels of the vehicle is cut off, and a drive state in which the driving force from the engine is allowed to be transmitted to the wheels, wherein:
said automatic stop control means is operable to, during the automatic engine stop control after the satisfaction of the automatic engine stop condition, set said automatic transmission mechanism in the drive state, when the automatic engine stop control is executed using said deceleration fuel-cut control of said fuel-supply control means, and to set said automatic transmission mechanism in the neutral state, when the automatic engine stop control is initiated under the condition that said fuel injection control means executes the fuel injection from said fuel injection valve to each of the cylinders.
